(19) Europäisches Patentamt
European Patent Office
Office européen des brevets

(11) **EP 3 647 060 A1**

(12) **EUROPEAN PATENT APPLICATION**
published in accordance with Art. 153(4) EPC

(43) Date of publication:
**06.05.2020 Bulletin 2020/19**

(51) Int Cl.:
**B41J 2/205** (2006.01)    **B41J 2/01** (2006.01)

(21) Application number: **17915870.4**

(22) Date of filing: **29.06.2017**

(86) International application number:
**PCT/JP2017/023994**

(87) International publication number:
**WO 2019/003390 (03.01.2019 Gazette 2019/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Konica Minolta, Inc.**
**Tokyo 100-7015 (JP)**

(72) Inventor: **IIDA, Masaru**
**Tokyo 100-7015 (JP)**

(74) Representative: **Gille Hrabal**
**Brucknerstrasse 20**
**40593 Düsseldorf (DE)**

(54) **INK DISCHARGE OPERATION ADJUSTMENT METHOD AND INKJET RECORDING DEVICE**

(57)    Provided are an ink discharge operation adjustment method and an inkjet recording device, with which the amount of ink droplets discharged from a nozzle can be accurately adjusted in a short time. This ink discharge operation adjustment method comprises: a recording step, in which ink droplets are discharged from a nozzle onto a recording medium by an ink discharge unit, causing a gray scale image and a beta image to be recorded; a fixing step of initiating the curing and fixing of the ink deposited on the recording medium; a first reading result acquisition step of acquiring the result of a reading performed by a reading means on an unrecorded area of the recording medium; a second reading result acquisition step of acquiring the results of reading the gray scale image and the beta image, for which the differential in elapsed time from the start of fixation to the reading is equal to or less than a reference difference; and a stepping step, in which settings relating to the adjustment of the amount of ink droplets are configured on the basis of coverage factor information relating to a coverage factor of the ink in the gray scale image, which is acquired on the basis of the results of reading the unrecorded area, the gray scale image, and the beta image.

## FIG.13

# Description

## Technical Field

The present invention relates to an ink discharge operation adjustment method and an inkjet recording device.

## Background Art

Conventionally, there is an inkjet recording device in which droplets of ink are discharged from a nozzle provided in an ink discharger and landed on a recording medium in order to record an image on a recording medium. There are inkjet recording devices in which droplets of ink which cures by applying predetermined energy such as ultraviolet rays or heat are discharged from a nozzle, and energy is applied to the ink which landed on the recording medium to cure the ink. With this, the ink is fixed on the recording medium.

The inkjet recording devices widely employ a method to show the halftone according to a coverage rate of ink on a region with a predetermined square area on the recording medium. The coverage rate of ink is a value according to a total amount of ink discharged on the region with the predetermined square area. Therefore, if a droplet amount of the ink discharged from the nozzle is shifted from a desired amount, an error occurs in a density of the halftone.

In view of the above, conventionally, there is a technique to record a halftone image in a predetermined tone on the recording medium and to adjust an ink discharge amount (droplet amount of discharged ink) from the nozzle based on a result read by a reading device which read the halftone image in order to adjust the density of the halftone to a desired value (for example, patent document 1 and patent document 2).

## Citation List

## Patent Literature

Patent Document 1: JP 2005-246655A
Patent Document 2: JP 2016-163940A

## Summary

## Technical Problem

However, the curing reaction progresses after the applying of the energy ends in the ink cured by energy. Together with the curing reaction continuing, an absorption amount of light in a specific wavelength band among wavelength bands for visible light reduces, and a reflection rate increases. Therefore, if the reading of the halftone image is performed while the curing reaction continues after the energy is applied to the ink, there may be a difference between a characteristic value (colorimetric value, reflection rate, etc.) of the halftone image obtained from the reading result and the final value, and the ink droplet amount discharged from the nozzle may not be adjusted accurately. If the halftone image is read after waiting for the curing reaction to end, the adjustment of the ink droplet amount may take a long amount of time.

The purpose of the present invention is to provide an ink discharge operation adjustment method and an inkjet recording device which can adjust the ink droplet amount discharged from the nozzle more accurately in a short amount of time.

## Solution to Problem

In order to solve the above problems, according to aspect 1, an ink discharge operation adjustment method which performs an adjustment regarding an ink discharge operation by an ink discharger which discharges an ink droplet from a nozzle, the method including: recording performed by the ink discharger discharging the ink droplet from the nozzle on a recording medium to record a halftone image in which the ink is discharged to form a predetermined halftone pattern and a solid image in which the ink completely covers a surface of the recording medium; fixing performed by a fixer to start curing of the ink which is discharged from the nozzle and which landed on the recording medium and to start fixing of the ink onto the recording medium; first reading result obtaining in which a reading result is obtained by a reader reading a non-recording region in which an image is not recorded on a recording medium; second reading result obtaining in which a reading result of the halftone image and the solid image is obtained so that a difference of an elapsed time from a start of the curing by the fixer to the reading by the reader is within a predetermined reference difference between the halftone image and the solid image; coverage rate information obtaining in which coverage rate information regarding a coverage rate of the ink in the halftone image is obtained based on the reading result by the reader reading the non-recording region, the halftone image, and the solid image; and setting which performs setting regarding adjustment of a droplet amount of the ink discharged from the nozzle based on the coverage rate information.

According to aspect 2, the ink discharge operation adjustment method according to aspect 1, wherein, in the recording, the halftone image and the solid image are recorded on one recording medium.

According to aspect 3, the ink discharge operation adjustment method according to aspect 2, wherein, in the second reading result obtaining, the reading result is obtained so that at least a portion of the halftone image on the one recording medium and at least a portion of the solid image on the one recording medium are read by the reader within a predetermined reference time difference.

According to aspect 4, the ink discharge operation adjustment method according to aspect 3, wherein, in the recording, the ink discharger discharges the droplet of the ink from the nozzle onto a recording medium conveyed by a conveyor; the conveyor conveys the recording medium on a path which passes a landing range in which the ink is discharged from the nozzle of the ink discharger and a fixing range in which the ink is fixed by the fixer; the ink discharger includes a plurality of nozzles provided throughout a recording width of the image in a width direction orthogonal to a conveying direction of the recording medium conveyed by the conveyor; and in the recording, at least the portion of the halftone image and at least the portion of the solid image are recorded on the one recording medium conveyed by the conveyor arranged in an intersecting direction intersecting with the conveying direction.

According to aspect 5, the ink discharge operation adjustment method according to any one of aspects 2 to 4, wherein in the first reading result obtaining and the second reading result obtaining, the reading result is obtained so that at least a portion of each of the non-recording region, the halftone image, and the solid image on the one recording medium are read by the reader within a predetermined reference time difference.

According to aspect 6, the ink discharge operation adjustment method according to aspect 4, wherein, in the recording, the halftone image and the solid image are recorded so that at least a portion of each of the non-recording region, the halftone image and the solid image are arranged in the intersecting direction; and in the first reading result obtaining and the second reading result obtaining, the reading result is obtained so that at least a portion of each of the non-recording region, the halftone image and the solid image on the one recording medium are read by the reader within a predetermined reference time difference.

According to aspect 7, the ink discharge operation adjustment method according to any one of aspects 1 to 6, wherein the predetermined halftone pattern is determined so that dots formed on the recording medium by ink discharge from the nozzle are separated from each other.

According to aspect 8, the ink discharge operation adjustment method according to aspect 7, wherein, in the recording, the ink discharger discharges the droplet of the ink from the nozzle onto a recording medium conveyed by the conveyor; the conveyor conveys the recording medium on a path which passes a landing range in which the ink is discharged from the nozzle of the ink discharger and a fixing range in which the ink is fixed by the fixer; the ink discharger includes a plurality of nozzles provided throughout a recording width of the image in a width direction orthogonal to a conveying direction of the recording medium conveyed by the conveyor; and the predetermined halftone pattern is determined so that a diameter of the dot formed on the recording medium by the droplet of the ink discharged from the nozzle is three times or more with relation to arrangement intervals of the plurality of nozzles in the width direction.

According to aspect 9, the ink discharge operation adjustment method according to any one of aspects 1 to 8, wherein in the coverage rate information obtaining, a characteristic value is obtained regarding a reflection rate of light in each of the non-recording region, a recording region of the halftone image and a recording region of the solid image from the reading result of the first reading result obtaining and the second reading result obtaining, and obtains the coverage rate information based on the characteristic value.

According to aspect 10, the ink discharge operation adjustment method according to aspect 9, wherein, the reader is able to obtain a spectral reflection characteristic for the surface of the recording medium, and in the coverage rate information obtaining, the characteristic value is obtained based on the spectral reflection rate characteristic obtained by the reader for each of the non-recording region, the halftone image, and the solid image.

According to aspect 11, the ink discharge operation adjustment method according to aspect 9 or 10, wherein in the coverage rate information obtaining, at least one of tristimulus values in a CIE-XYZ color system is obtained as the characteristic value.

According to aspect 12, the ink discharge operation adjustment method according to aspect 11, wherein, the ink discharger includes a yellow ink discharge head which discharges from the nozzle yellow ink, a magenta ink discharge head which discharges from the nozzle magenta ink, a cyan ink discharge head which discharges from the nozzle cyan ink, and a black ink discharge head which discharges from the nozzle black ink, in the coverage rate information obtaining, if the coverage rate information regarding the halftone image recorded by the yellow ink discharge head is obtained, the coverage rate information is obtained based on a stimulus value Z obtained by the reader reading the non-recording region, and the halftone image and the solid image recorded with the yellow ink discharge head, and in the coverage rate information obtaining, if the coverage rate information regarding the halftone image recorded by any one ink discharge head among the magenta ink discharge head, the cyan ink discharge head, and the black ink discharge head is obtained, the coverage rate information is obtained based on a stimulus value Y obtained by the reader reading the non-recording region, and the halftone image and the solid image recorded with the any one ink discharge head.

According to aspect 13, the ink discharge operation adjustment method according to aspect 10, wherein in the coverage rate information obtaining, the coverage rate information is obtained based on a representative value of the reflection rate in a portion of a wavelength band including a wavelength in which a maximum value can be obtained in a difference between a reflection rate in the spectral reflection rate characteristic in the non-recording region and the reflection rate in the spectral reflection rate characteristic in the solid image in a wavelength band of visible light.

According to aspect 14, the ink discharge operation adjustment method according to aspect 13, wherein, the ink discharger includes a yellow ink discharge head which discharges from the nozzle yellow ink, a magenta ink discharge head which discharges from the nozzle magenta ink, a cyan ink discharge head which discharges from the nozzle cyan ink, and a black ink discharge head which discharges from the nozzle black ink, in the coverage rate information obtaining, if the coverage rate information regarding the halftone image recorded by the yellow ink discharge head is obtained, the coverage rate information is obtained based on a representative value of the spectral reflection rate in a wavelength band including at least a portion of a wavelength band with 430 nm or more and 470 nm or less, in the coverage rate information obtaining, if the coverage rate information regarding the halftone image recorded by the magenta ink discharge head is obtained, the coverage rate information is obtained based on a representative value of the spectral reflection rate in a wavelength band including at least a portion of a wavelength band with 520 nm or more and 560 nm or less, in the coverage rate information obtaining, if the coverage rate information regarding the halftone image recorded by the cyan ink discharge head is obtained, the coverage rate information is obtained based on a representative value of the spectral reflection rate in a wavelength band including at least a portion of a wavelength band with 600 nm or more and 640 nm or less, and in the coverage rate information obtaining, if the coverage rate information regarding the halftone image recorded by the black ink discharge head is obtained, the coverage rate information is obtained based on a representative value of the spectral reflection rate in a wavelength band including at least a portion of a wavelength band with 520 nm or more and 560 nm or less.

According to aspect 15, the ink discharge operation adjustment method according to any one of aspect 9 to 14, wherein, in the coverage rate information obtaining, the characteristic values in a plurality of difference positions are obtained for each of the non-recording region, the halftone image, and the solid image, and the representative value of the characteristic value which satisfies a reliability condition regarding reliability of the characteristic value is determined from among the characteristic values in the plurality of positions, and in the coverage rate information obtaining, the coverage rate information is obtained based on the representative value of each of the non-recording region, the halftone image, and the solid image.

According to aspect 16, the ink discharge operation adjustment method according to aspect 15, wherein, in the coverage rate information obtaining, a representative value of a characteristic value within a predetermined first reference range is determined from a minimum value of the characteristic value in the plurality of positions for each of the halftone image and the solid image, and in the coverage rate information obtaining, a representative value of a characteristic value within a predetermined second reference range is determined from a maximum value of the characteristic value in the plurality of positions for the non-recording region.

According to aspect 17, the ink discharge operation adjustment method according to any one of aspect 9 to 16, wherein, in the coverage rate information obtaining, from the reading result, a characteristic value RM regarding the reflection rate of light in the non-recording region, a characteristic value RH regarding the reflection rate of light in the recording region of the halftone image, and a characteristic value RS regarding the reflection rate of light in the recording region of the solid image are obtained, and the coverage rate information Df is obtained by a formula $Df = (RM-RH)/(RM-RS)$.

According to aspect 18, the ink discharge operation adjustment method according to any one of aspects 1 to 17, wherein, the ink discharger discharges the droplet of the ink from the nozzle according to a predetermined driving signal, and in the setting, setting regarding correction of a feature amount is performed based on a correlation obtained in advance between a predetermined feature amount regarding the driving signal and the coverage rate information.

According to aspect 19, the ink discharge operation adjustment method according to aspect 18, wherein the feature amount is a voltage amplitude of the driving signal.

According to aspect 20, the ink discharge operation adjustment method according to any one of aspects 1 to 19, wherein, the ink discharger discharges from the nozzle the droplet of the ink which cures by light in a predetermined wavelength band, and in the fixing, the fixer irradiates the light on the ink discharged from the nozzle and landed on the recording medium to start the curing of the ink and the fixing of the ink to the recording medium.

In order to solve the above problems, according to aspect 21, an inkjet recording device including: an ink discharger which discharges an ink droplet from a nozzle; a recording controller which controls recording performed by the ink discharger discharging the ink droplet from the nozzle on a recording medium to record a halftone image in which the ink is discharged to form a predetermined halftone pattern and a solid image in which the ink completely covers a surface of the recording medium; a fixer which cures the ink on the recording medium and which fixes the ink onto the recording medium; a fixing controller which controls the fixer to start curing of the ink which is discharged from the nozzle and which landed on the recording medium and to start fixing of the ink onto the recording medium; a first reading result obtainer in which a reading result is obtained by a reader reading a non-recording region in which an image is not recorded on a recording medium; a second reading result obtainer in which a reading result of the halftone image and the solid image is obtained so that a difference of an elapsed time from a start of the curing by the fixer to the reading by the reader is within a predetermined reference difference between the halftone image and the solid image; a coverage rate information obtainer in which coverage rate information regarding a coverage rate of the ink in the halftone image is obtained based on the reading result by the reader reading the non-recording region, the halftone image, and the solid image; and a setter which performs setting regarding adjustment of a droplet amount of the ink discharged from the nozzle based on the coverage rate information.

Advantageous Effects of Invention

According to the present invention, it is possible to achieve the effect of adjusting the ink droplet amount discharged from the nozzle more accurately in a short amount of time.

Brief Description of Drawings

FIG. 1 is a diagram showing a schematic configuration of an inkjet recording device.
FIG. 2 is a schematic diagram describing a configuration of a head unit.
FIG. 3 is a schematic diagram describing a configuration of a head module.
FIG. 4A is a schematic cross section diagram showing a neutral state in which a driving voltage is not applied to a piezoelectric element.
FIG. 4B is a schematic cross section diagram showing a state in which a positive driving voltage is applied to the piezoelectric element.
FIG. 4C is a schematic cross section diagram showing a state in which a negative driving voltage is applied to the piezoelectric element.
FIG. 5 is a diagram showing a voltage waveform of a driving signal supplied to the piezoelectric element.
FIG. 6 is a block diagram showing a configuration of the main functions in the inkjet recording device.
FIG. 7A is a diagram describing a relation between a dot diameter of ink and a reflection rate of a halftone image.
FIG. 7B is a diagram describing a relation between a dot diameter of ink and a reflection rate of a halftone image.
FIG. 8 is a diagram describing influence of light reflected from an ink surface and a medium surface in a halftone reflection rate.
FIG. 9 is a diagram showing an example of a spectral reflection rate characteristic in an ink surface of ultraviolet curing ink.
FIG. 10A is a diagram showing a reflection rate of a halftone image right after irradiating ultraviolet rays.
FIG. 10B is a diagram showing a reflection rate of the halftone image in which the cuing reaction of the ink continues.
FIG. 11A is a diagram showing a spectral refection rate characteristic of each of YMCK ink.
FIG. 11B is a diagram showing a contribution rate on tristimulus values of a CIE-XYZ color system for each wavelength.
FIG. 12 is a diagram showing an example of a test chart.
FIG. 13 is a diagram describing a relation of correspondence between a head unit and a test pattern, and contents of the test pattern.
FIG. 14A is a diagram showing image data and a dot arrangement of ink regarding a halftone image.
FIG. 14B is a diagram showing image data and a dot arrangement of ink regarding a halftone image.
FIG. 14C is a diagram showing image data and a dot arrangement of ink regarding a halftone image.
FIG. 14D is a diagram showing image data and a dot arrangement of ink regarding a halftone image.
FIG. 15 is a diagram showing image data and a dot arrangement of ink regarding a solid image.
FIG. 16A is a diagram describing a method to complement a discharge failure nozzle.
FIG. 16B is a diagram describing a method to complement a discharge failure nozzle.
FIG. 17 is a diagram showing one dot pattern region and a non-recording region W adjacent to the one dot pattern region extracted.
FIG. 18 is a flowchart showing a control process of a driving voltage adjustment process.
FIG. 19 is a flowchart showing a control process of an index value calculating process.
FIG. 20 is a diagram showing a contribution rate on an LMS characteristic value for each wavelength.
FIG. 21 is a flowchart showing a control process of a driving voltage adjustment process according to a modification.

Description of Embodiments

Embodiments regarding the ink discharge operation adjustment method and the inkjet recording device are described with reference to the drawings.

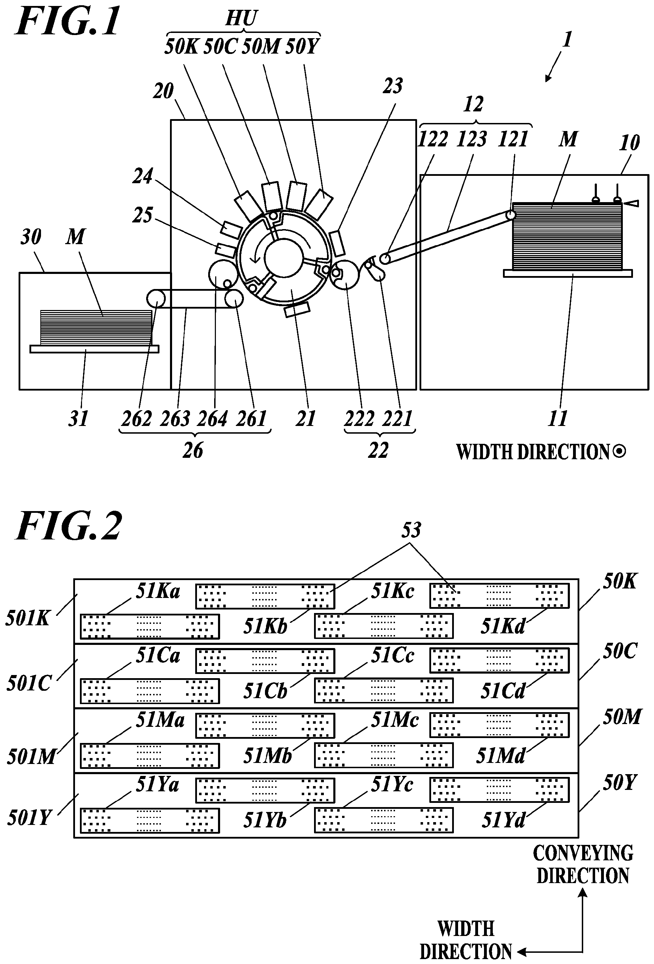

FIG. 1 is a diagram showing a schematic configuration of the inkjet recording device 1 according to an embodiment of the present invention.

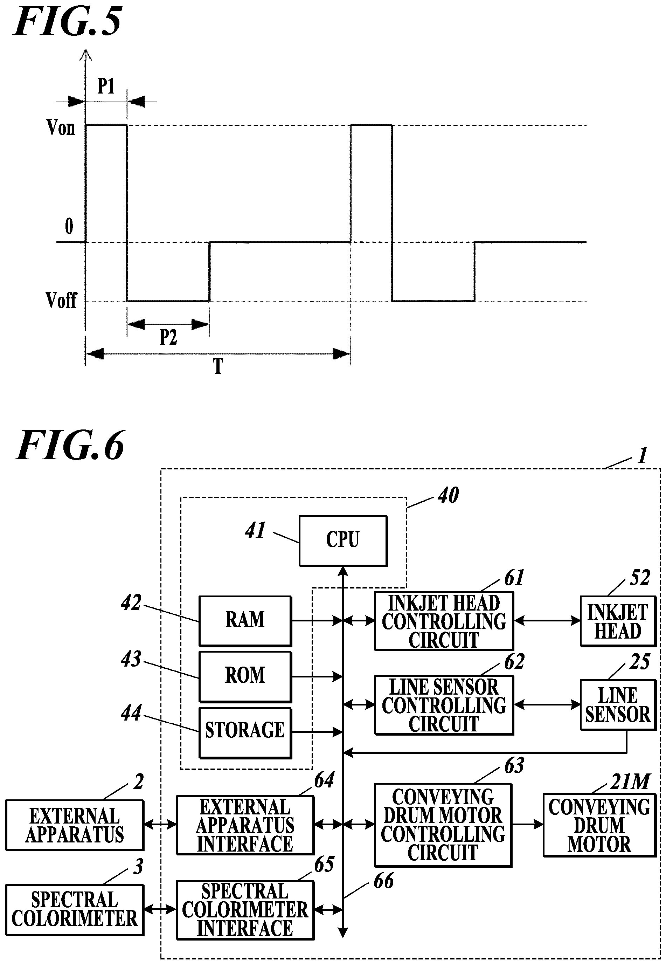

The inkjet recording device 1 includes a sheet feeder 10, an image recorder 20, a sheet ejector 30, and a controller 40 (FIG. 6) (recording controller, fixing controller, first reading result obtainer, second reading result obtainer, coverage rate information obtainer, setter). Under the control by the controller 40, the inkjet recording device 1 conveys a recording medium M stored in a sheet feeder 10 to an image recorder 20, records (forms) an image on the recording medium M with the image recorder 2, and conveys to the sheet ejector 30 the recording medium M on which the image is recorded.

The sheet feeder 10 includes a sheet feeding tray 11 which stores the recording medium M, and a transferring unit 12 which transfers the recording medium M from the sheet feeding tray 11 to the image recorder 20.

The transferring unit 12 includes a ring-shaped belt 123 in which the inner side is supported by two rollers 121 and 122. The transferring unit 12 conveys the recording medium M by rotating the rollers 121 and 122 with the recording medium M placed on the belt 123.

The image recorder 20 includes a conveying drum 21 (conveyor), a transporting unit 22, a heater 23, a head unit group HU (ink discharger) including head units 50Y, 50M, 50C, and 50K (hereinafter referred to as simply head unit 50 when the color is not discriminated), a fixer 24 (fixing unit), a line sensor 25, and a delivery unit 26.

The conveying drum 21 holds the recording medium M on the outer circumference surface (conveying surface) of a cylinder shape, and rotates centering around a rotating axis extending in a direction orthogonal to the diagram shown in FIG. 1 to convey the recording medium M in the conveying direction along the outer circumference surface. The conveying drum 21 includes a claw portion and an intake portion (not shown) to hold the recording medium M on the outer circumference surface. The edge of the recording medium M is held by the claw portion and is pulled toward the outer circumference surface by the intake portion so that the recording medium M is held on the outer circumference surface of the conveying drum 21.

The conveying drum 21 includes a conveying drum motor 21M (FIG. 6) to rotate the conveying drum 21, and rotates in an angle in proportion with a rotating amount of the conveying drum motor 21M. The conveying drum 21 conveys the recording medium M in a path which passes a landing range of the ink from the nozzle 53 in the head unit group HU and an irradiating path of ultraviolet rays by the fixer 24.

The transporting unit 22 relays the recording medium M transferred from the transferring unit 12 to the conveying drum 21. The transporting unit 22 is provided in a position between the transferring unit 12 and the conveying drum 21. The transporting unit 22 holds and lifts one edge of the recording medium M transferred from the transferring unit 12 using a swing arm 221, and relays the recording medium M to the conveying drum 21 using a transporting drum 222.

The heater 23 heats a recording medium M held by the conveying drum 21. For example, the heater 23 includes an infrared heater and emits heat in response to electricity being provided to the infrared heater. The heater 23 is provided near an outer circumference surface of the conveying drum 21 and is provided to be positioned in an upstream side of the head unit 50 in the conveying direction of the recording medium M. The emission of heat by the heater 23 is controlled by the controller 40 so that the recording medium M held by the conveying drum 21 and passing near the heater 23 is a predetermined temperature.

The head unit group HU discharges ink from the nozzle of each head unit 50 to the recording medium M held by the conveying drum 21 to record the image. The head unit 50 is positioned so that the ink discharge surface is opposite the outer circumference surface of the conveying drum 21 with a predetermined distance in between. The inkjet recording device 1 according to the present embodiment is provided with four head units 50Y, 50M, 50C, and 50K corresponding to the four colors of ink including yellow (Y), magenta (M), cyan (C), and black (K). The above four head units 50 are arranged in the order of the color Y, M, C, K from the upstream side along the conveying direction of the recording medium M with a predetermined interval between each other.

FIG. 2 is a schematic diagram to describe the configuration of the head unit 50. The diagram shows a view from a direction overlooking the conveying drum 21 from an upper surface of the head unit 50. For the purpose of ease of description, the position of the nozzles 53 provided in the ink discharge surface opposite the conveying drum 21 (the position of the nozzle 53 is shown by making the head unit 50 transparent) are shown.

The head unit 50Y corresponding to the yellow ink includes four head modules 51Y (51Ya to 51Yd) each including the ink discharge surface provided with a plurality of nozzles 53 on the ink discharge surface. The four head modules 51Y are attached to an attaching unit 501Y arranged in a zig-zag so that a positioning range of the nozzles 53 in the width direction cover a recording width of an image recorded on the recording medium M. Similarly, the head units 50M, 50C, and 50K corresponding to the magenta ink, cyan ink, and black ink each includes four head modules 51M, 51C, and 51K (hereinbelow, if the color does not have to be discriminated, the head modules 51Y, 51M, 51C, and 51K are referred to as simply the head module 51). By positioning the head module 51 as described above, the inkjet recording device 1 is able to record the image by discharging ink from the nozzles 53 with the head unit 50 in a fixed state. That is, the inkjet recording device 1 records the image in a single pass method.

Numbers 0 to 3 are set in each of the four head modules 51Y. Similarly, the numbers 0 to 3 are set in each of the head modules 51M, 51C, and 51K.

Below, if the head module 51 is shown including the number, reference signs a to d corresponding to the numbers 0 to 3 are provided and the reference signs are shown as head modules 51Ya to 51Yd (if the color does not have to be discriminated, the head modules 51a to 51d).

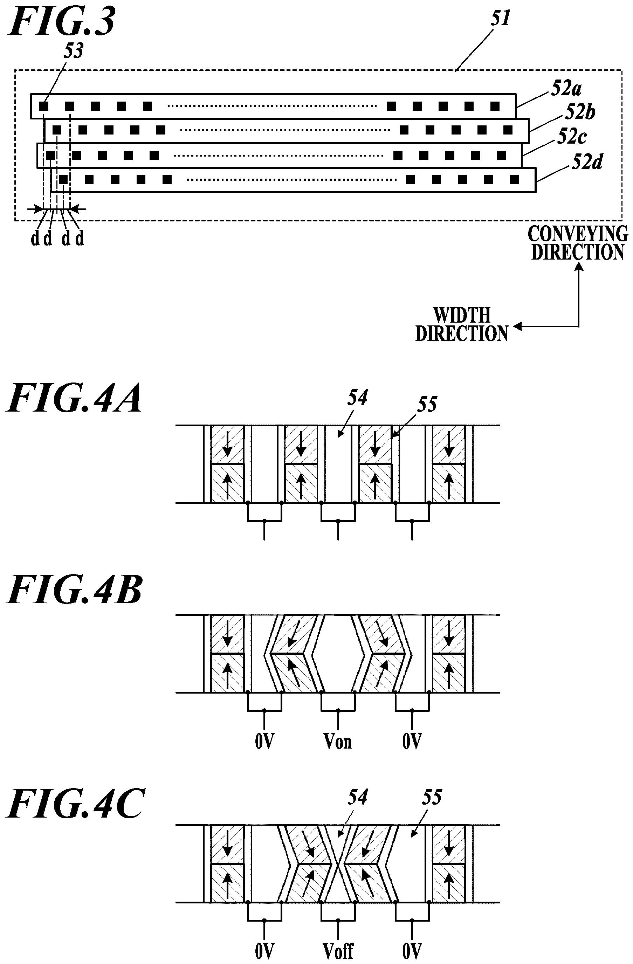

FIG. 3 is a schematic diagram which describes the configuration of the head module 51.

Each head module 51 includes four inkjet heads 52 (ink discharge head) positioned so that the position of the nozzles 53 in the width direction are different from each other. Numbers 0 to 3 are set in each of the four inkjet heads 52. Below, if the inkjet head 52 is shown including the number, reference signs a to d corresponding to the numbers 0 to 3 are provided and the reference signs are shown as inkjet heads 52a to 52b.

The inkjet head 52 provided in the head unit 50Y corresponds to a yellow ink discharge head which discharges yellow ink, the inkjet head 52 provided in the head unit 50M corresponds to a magenta ink discharge head which discharges magenta ink, the inkjet head 52 provided in the head unit 50C corresponds to a cyan ink discharge head which discharges cyan ink, the inkjet head 52 provided in the head unit 50K corresponds to a black ink discharge head which discharges black ink.

Each inkjet head 52 includes 900 nozzles 53. The interval between the nozzles 53 is 1/300 inch (about 84.7 $\mu$m), and a single inkjet head 52 can record the image at a resolution of 300 dpi in the width direction. The four inkjet heads 52a to 52d are positioned to be in a relative position as shown in FIG. 3. With this, in the entire head module 51, the 3600 nozzles 53 are arranged with an arrangement interval d at 1/1200 inch (about 21.2 $\mu$m) in the width direction, and the image with a resolution of 1200 dpi in the width direction can be recorded.

FIG. 4 is a schematic cross-sectional view describing an ink discharge operation in the inkjet head 52.

The inkjet head 52 includes a pressure chamber 54 which is communicated with each nozzle 53 and which stores ink, and a piezoelectric element 55 which is provided on a wall of the pressure chamber 54. If a driving signal is applied from the driving circuit of the inkjet head 52 to the piezoelectric element 55, the pressure in the pressure chamber 54 changes due to the piezoelectric element 55 deforming in response to the voltage of the driving signal (hereinafter referred to as the driving voltage). Then, the ink is discharged from the nozzle 53 communicated with the pressure chamber 54.

FIG. 4A shows a neutral state in which the driving voltage is not applied to the piezoelectric element 55.

FIG. 4B shows a state in which a positive driving voltage Von is applied to the piezoelectric element 55. In the state of FIG. 4(b), the pressure chamber 54 expands and pressure is reduced, and the ink is introduced into the pressure chamber 54 from the ink chamber (not shown) communicated with the pressure chamber 54.

FIG. 4C shows a state in which a negative driving voltage Voff is applied to the piezoelectric element 55. In the state of FIG. 4(c), the pressure chamber 54 contracts and pressure is applied, and the ink in the pressure chamber 54 is discharged from the nozzle 53.

FIG. 5 is a diagram showing a voltage waveform of the driving signal supplied to the piezoelectric element 55 in one ink discharge.

In the inkjet head 52, one ink discharge operation is performed to discharge an ink droplet according to the driving signal based on the driving voltages Von, Voff (voltage amplitude) and applying time P1, P2 set for the inkjet head 52. Specifically, the positive driving voltage Von is applied throughout the applying time P1 from the start of applying the driving signal and then, the negative driving voltage Voff is applied throughout the applying time P2 to perform one ink discharge operation. Such driving signal is repeatedly applied in a cycle T so that the ink can be continuously discharged from the nozzle 53.

At the time of manufacturing, a characteristic inspection at the time of manufacturing is performed on each inkjet head 52 using test ink not including colorant. In such characteristic inspection at the time of manufacturing, the driving voltages Von, Voff in which a predetermined ink discharge characteristic is obtained and the applying time P1, P2 for the above are obtained, and information regarding setting of the driving voltages Von, Voff, and the applying time P1, P2 are written in the nonvolatile memory (EEPROM) which is in the inkjet head 52 and which is not shown in the diagram. The above ink discharge characteristic is, for example, an ink droplet amount of the discharged ink (droplet volume).

The ink discharge characteristic in the characteristic inspection at the time of manufacturing does not always match with the ink discharge characteristic desired as the inkjet recording device 1. Further, since the ink which is actually used is different from the test ink, if the inkjet head 52 is mounted and used in the inkjet recording device 1, the adjustment of the driving signal and specifically the driving voltages Von, Voff are necessary. Since there may be variation when the product is manufactured regarding the responsiveness to the driving signal in the piezoelectric element 55 and the nozzle size of the nozzle 53, each inkjet head 52 needs to be adjusted separately.

The adjustment of the driving voltages Von, Voff can be performed by setting the degree of the driving voltage Von itself or the driving voltage Voff itself, or a coefficient to determine the magnitude of the driving voltages Von, Voff can be set. For example, such coefficient can be a head voltage coefficient HVC showing the driving voltage Von, Voff with reference voltages V1, V2 as units in the following formula.

$$\mathrm{Von} = \mathrm{HVC} \times \mathrm{V1}, \ \mathrm{Voff} = \mathrm{HVC} \times \mathrm{V2}.$$

According to the present embodiment, the driving voltages Von, Voff are adjusted by adjusting the head voltage coefficient HVC.

The ink including the following features is used as ink discharged from the nozzle 53, the phase changes to gel or sol according to temperature, and the ink cures by applying predetermined energy (according to the present embodiment, by irradiating ultraviolet rays).

The head module 51 includes an ink heater (not shown). The ink heater operates under the control by the controller 40 and heats the ink to a temperature so that the ink becomes a sol state. The ink heated to a sol state is discharged from the nozzle 53.

The fixer 24 is positioned on the downstream side of the head unit 50 in the conveying direction. The fixer 24 includes an LED (Light Emitting Diode) which emits ultraviolet rays. The fixer 24 performs an irradiating operation which irradiates ultraviolet rays by emitting rays from the ultraviolet LED at a predetermined irradiating range to the recording medium M held on the outer circumference surface of the conveying drum 21, cures the ink discharged on the recording medium M, and fixes the ink. The irradiating range of the ultraviolet rays by the fixer 24 is to be a range in a line shape or a rectangular shape extending in a width direction. With this, the irradiating operations of the ultraviolet rays by the fixer 24 on the line parallel to the width direction of the recording medium M end at the same timing. The irradiating range corresponds to a fixing range in which the ink is fixed by the fixer 24.

The line sensor 25 is positioned in the position on the downstream side of the fixer 24 in the conveying direction. The line sensor 25 images the image recorded in the recording medium M held and conveyed by the conveying drum 21 and outputs secondary imaging data. The line sensor 25 is used for monitoring the recording state of the inkjet recording device 1.

The delivering unit 26 includes a ring shaped belt 263 supported by two rollers 261, 262 on the inner side, and a cylinder transporting drum 264 which transports the recording medium M from the conveying drum 21 to the belt 263. The recording medium M transported on the belt 263 from the conveying drum 21 by the transporting drum 264 is conveyed by the belt 263 to be sent to a sheet ejector 30.

The sheet ejector 30 includes a plate shaped sheet ejecting tray 31 in which the recording medium M sent from the image recorder 20 by the delivering unit 26 is placed.

FIG. 6 is a block diagram showing a configuration of the main functions in the inkjet recording device 1.

The inkjet recording device 1 includes a controller 40 which includes a CPU 41 (Central Processing Unit), a RAM 42 (Random Access Memory), a ROM 43 (Read Only Memory), and storage 44, an inkjet head controlling circuit 61 connected to an inkjet head 52, a line sensor controlling circuit 62 connected to a line sensor 25, a conveying drum motor controlling circuit 63 connected to a conveying drum motor 21M, an external apparatus interface 64 connected to an external apparatus 2, and a spectral colorimeter interface 65 connected to a spectral colorimeter 3 (reader). The CPU 41 is connected to the RAM 42, the ROM 43, the storage 44, the inkjet head controlling circuit 61, the line sensor controlling circuit 62, the conveying drum motor controlling circuit 63, the external apparatus interface 64, and the spectral colorimeter interface 65 through a bus 66.

The CPU 41 performs various calculating processes and centrally controls the entire operation of the inkjet recording device 1. For example, the CPU 41 outputs the image data of the image recorded on the recording medium M to the inkjet head 52 from the inkjet head controlling circuit 61 in order to discharge ink from the nozzle 53 of the inkjet head 52 and to record the image on the recording medium M. The CPU 41 outputs the control signal from the line sensor controlling circuit 62 to the line sensor 25 so that the line sensor 25 images the image recorded on the recording medium M. The CPU 41 outputs the control signal from the conveying drum motor controlling circuit 63 to the driving circuit of the conveying drum motor 21M in order to operate the conveying drum motor 21M to rotate the conveying drum 21. The CPU 41 calculates the suitable driving voltages Von, Voff (head voltage coefficient HVC) in each inkjet head 52 based on the colorimetric value of the test chart described later. The result is set in the inkjet head controlling circuit 61 and stored in the storage 44.

The RAM 42 provides a working memory space to the CPU 41, and stores temporary data to perform various control, image data input from the external apparatus 2 through the external apparatus interface 64, and the colorimetric value data obtained by optical measurement by the spectral colorimeter 3. Such image data and colorimetric value data can be stored in the storage 44.

The ROM 43 stores various control programs executed by the CPU 41 and setting data. The program includes, for example, a program which calculates the driving voltage set in each inkjet head 52 based on the measured result of the optical measurement of the test chart. Instead of the ROM 43, a rewritable nonvolatile memory such as EEPROM (Electrically Erasable Programmable Read Only Memory) or a flash memory can be used.

The storage 44 includes a storage device or a storage element which holds data to be stored in a state in which power of the inkjet recording device 1 is cut, examples including an HDD (Hard Disc Drive), etc. The storage 44 stores various setting parameters described later used to obtain a setting value (head voltage coefficient HVC) of the driving voltage of the inkjet head 52 from the measured result of the optical measurement of the test chart and the obtained setting values of the driving voltage.

Based on the signal input from the CPU 41 and the image data stored in the RAM 42 or the storage 44, the inkjet head controlling circuit 61 outputs to the inkjet head 52 the signal to determine the timing and/or the size of the driving signal applied from the driving circuit of the inkjet head 52 to the piezoelectric element 55 corresponding to each nozzle 53 of the inkjet head 52.

Based on the signal input from the CPU 41, the line sensor controlling circuit 62 outputs to the line sensor 25 the control signal to control the line sensor 25 to perform imaging at a predetermined timing.

Based on the signal input from the CPU 41, the conveying drum motor controlling circuit 63 outputs the control signal to operate the conveying drum motor 21M to the conveying drum motor 21M.

The external apparatus interface 64 performs transmitting and receiving of the data between the external apparatus 2. The external apparatus interface 64 includes either one or a combination of the various serial interfaces and various parallel interfaces.

The external apparatus 2 may be, a personal computer for example, and the image data, etc. of the image recorded in the inkjet recording device 1 may be supplied to the controller 40 through the external apparatus interface 64.

The spectral colorimeter interface 65 receives colorimetric data from the spectral colorimeter 3 and transmits and receives the control signal, etc. of the spectral colorimeter 3. The spectral colorimeter interface 65 includes either one or a combination of the various serial interfaces and various parallel interfaces.

The spectral colorimeter 3 is a measuring instrument for optical colorimetry on a non-recorded region in which the image is not recorded on the recording medium M and a later described test chart (driving voltage adjustment chart). The spectral colorimeter 3 performs optical measurement on at least one measured point, and supplies a measured result (spectral reflection rate) of each measured point to the controller 40 through the spectral colorimeter interface 65. The spectral colorimeter 3 is one type of reader, the optical measurement by the spectral colorimeter 3 is one type of reading by the reader, and the measured result obtained by the optical measurement is one type of reading result by the reader.

Next, the method to adjust the ink droplet amount discharged from the nozzle 53 in the inkjet recording device 1 is described.

As described above, it is difficult to accurately adjust the droplet amount to a desired value when the ink is actually discharged by using only the setting of the driving voltages Von, Voff and the applying time Pa, P2 according to the characteristic inspection at the time of manufacturing using the test ink. Therefore, it is necessary to adjust the ink discharge operation again for each inkjet head 52 so that the droplet amount when the ink is actually discharged becomes a desired value. Even if a suitable adjustment is made, the characteristics of the piezoelectric element 55 may change due to continuous use of the inkjet head 52, and the droplet amount of the discharged ink may change. Therefore, the adjustment may need to be performed again.

Conventionally, if the ink droplet amount is adjusted, the ink is discharged on the recording medium M according to the predetermined halftone to record the halftone image. By setting the driving voltages Von, Voff of the driving signal based on the colorimetric value and the reflection rate obtained by measuring the halftone image, the ink discharge operation is adjusted so that the droplet amount of the ink discharged from the nozzle 53 becomes a desired amount.

The conventional adjustment method is described below.

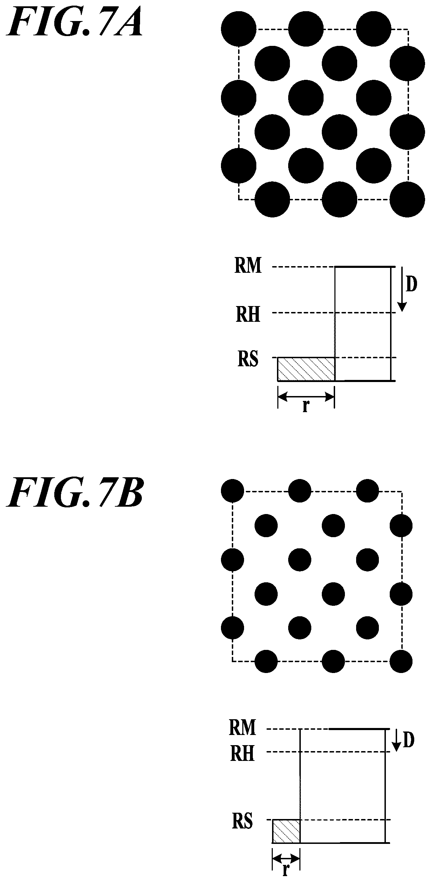

FIG. 7A and FIG. 7B are diagrams describing a relation between a dot diameter of the ink and the reflection rate of the halftone image.

FIG. 7A and FIG. 7B show an arrangement of dots of ink in a halftone image recorded by ink discharge performed by different inkjet heads 52 based on the same image data. Here, the dot diameter of the ink in FIG. 7A is larger than the dot diameter of the ink in FIG. 7B. That is, the droplet amount of the ink discharged from the nozzle 53 is larger in the inkjet head 52 recording the halftone image in FIG. 7A than the inkjet head 52 recording the halftone image in FIG. 7B.

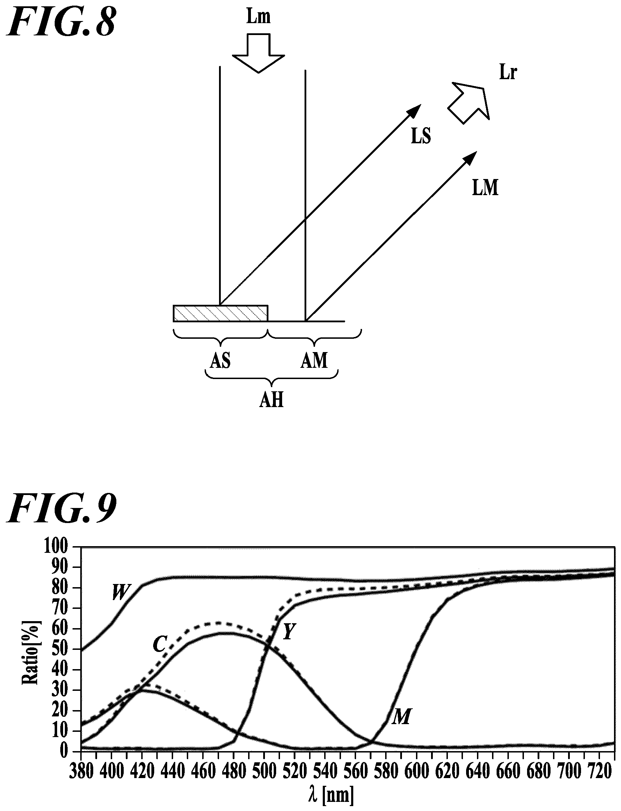

The reflection rate of light in the halftone image (hereinafter referred to as halftone reflection rate RH) shown in FIG. 7A and FIG. 7B are shown as a ratio of a reflection light amount Lr with relation to a measured light source light amount Lm irradiated in a recording region AH of the halftone image, as shown in FIG. 8. Here, the reflection light amount Lr is a total of a reflection light amount LS from an ink surface AS covered by ink and a reflection light amount LM from a medium surface AM where the recording medium surface is exposed. The reflection light amount LS from the ink surface AS is a value according to the product of the light reflection rate on the ink surface AS (hereinafter referred to as ink surface reflection rate RS) and the ink coverage rate r in the halftone image ($0 \leq r \leq 1$). The reflection light amount LM from the medium surface AM is a value according to the product between a reflection rate of the light on the medium surface AM (hereinafter referred to as medium surface reflection rate RM) and percentage of the medium surface AM in the halftone image (1-r).

Therefore, the halftone image reflection rate RH is shown by the following formula (1)

$$RH = r \cdot RS + (1-r) \, RM \quad \dots (1)$$

In FIG. 7A and FIG. 7B, a difference D between the medium surface reflection rate RM and the halftone reflection rate RH shows a density of the halftone image.

As can be seen from the formula (1), the halftone reflection rate RH has a correlation with the coverage rate r, and the halftone reflection rate RH becomes smaller as the coverage rate r becomes larger. For example, in the halftone image in FIG. 7A in which the coverage rate r is relatively larger than FIG. 7B, the halftone reflection rate RH becomes smaller than FIG. 7B (see lower portion of FIG. 7A and FIG. 7B). As described above, the coverage rate r has a correlation with the ink droplet amount. Therefore, an ink discharge amount (driving voltages Von, Voff) is adjusted based on the halftone reflection rate RH obtained by measuring the halftone image, and the droplet amount of ink discharged from the nozzle 53 can be adjusted so that the coverage rate r in the halftone image can be a predetermined value.

However, according to such conventional adjustment method, the ink droplet amount cannot be adjusted accurately if ink used in the image forming is ink which cures in response to energy being applied. The reason is described below using the ultraviolet curing ink which cures by ultraviolet rays as the example.

According to the inkjet recording device 1 which uses the ultraviolet curing ink, the ultraviolet rays are irradiated on the recording medium M on which ink is discharged. The curing agent included in the ink starts a curing reaction (polymerization reaction) with the energy. With this, the ink is cured and fixed in a short amount of time. However, the curing reaction in the curing agent is not completed immediately, and the curing reaction of the curing agent continues to progress in the ink even after the curing and fixing state of the ink becomes sufficient for printed material. The time necessary until the curing reaction ends may be a few tens of minutes, and sometimes a few hours, depending on the type of ink and the amount of ink discharged. The curing agent before the curing reaction included in the ultraviolet curing ink has a characteristic to absorb light in a short wavelength band near the ultraviolet ray region among the wavelength band of the visible light, and the amount of light which is absorbed from the short wavelength band changes depending on the progress of the curing reaction.

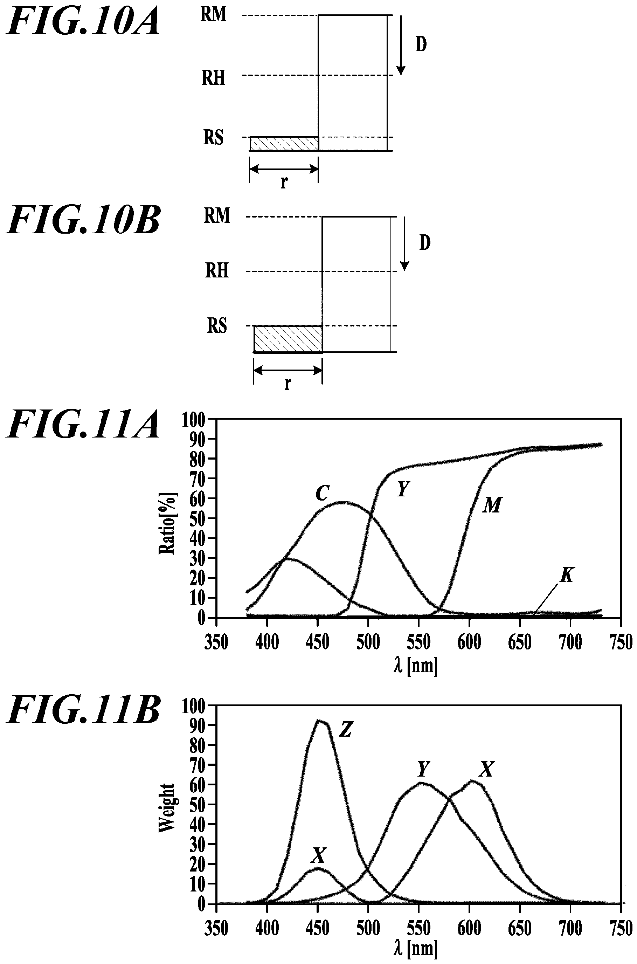

FIG. 9 is a diagram showing an example of a spectral reflection rate characteristic in an ink surface AS of ultraviolet curing ink. Curves with a reference sign CMY attached in FIG. 9 show the spectral reflection rate characteristic of the cyan ink, magenta ink, and the yellow ink, and the curve with the reference sign W shows the spectral reflectance rate characteristic of the medium surface AM. The curve shown with a solid line shows a spectral reflection rate characteristic measured within 5 minutes from when the ultraviolet ray irradiating (irradiation operation by the fixer 24) ends. The curve shown with a broken line shows the spectral reflectance characteristic measured after 30 minutes elapsed from when the ultraviolet ray irradiating ends. From the above curves, change over time can be seen in the ink surface reflection rate RS in the ink surface AS and even if the ink coverage rate r in the halftone image as the measured target is the same, change over time can be seen in the colorimetric value and the reflection rate. Therefore, if the optical measurement is performed on the halftone image when the curing reaction is progressing after ultraviolet rays are irradiated on the ink, the halftone reflection rate RH obtained from the measured result is shifted from the final value. For example, even if the halftone reflection rate RH and the ink surface reflection rate RS right after the ultraviolet irradiating ends are shown in the schematic diagram shown in FIG. 10A, the ink surface reflection rate RS increases as shown in FIG. 10B as the curing reaction progresses, and the halftone reflection rate RH increases with the above. Therefore, even if the ink droplet amount is adjusted based on the halftone reflection rate RH in the state shown in FIG. 10A, it is not possible to adjust the droplet amount to the desired droplet amount.

On the other hand, if the curing reaction of the curing agent progresses sufficiently and the optical measurement is performed on the halftone image after the change over time of the ink surface reflection rate RS ends and becomes final, the advantages of the ultraviolet curing ink such as the ink curing and fixing in a short amount of time cannot be utilized, and further, a long amount of time is needed for adjustment.

In view of the above problems of the conventional technique, according to the adjustment method of the present embodiment, instead of the halftone reflection rate RH, the droplet amount of ink discharged from the nozzle 53 is adjusted based on the index value Df shown by the following formula (2).

$$Df = (RM\text{-}RH)/(RM\text{-}RS) \ldots(2)$$

The right side of formula (2) is equal to solving the formula (1) for the coverage rate r, and the index value Df corresponds to the coverage rate information regarding the coverage rate r. The coverage rate r is in correlation with the density of the halftone, and the index value Df can be said to be the index value regarding the density of the halftone.

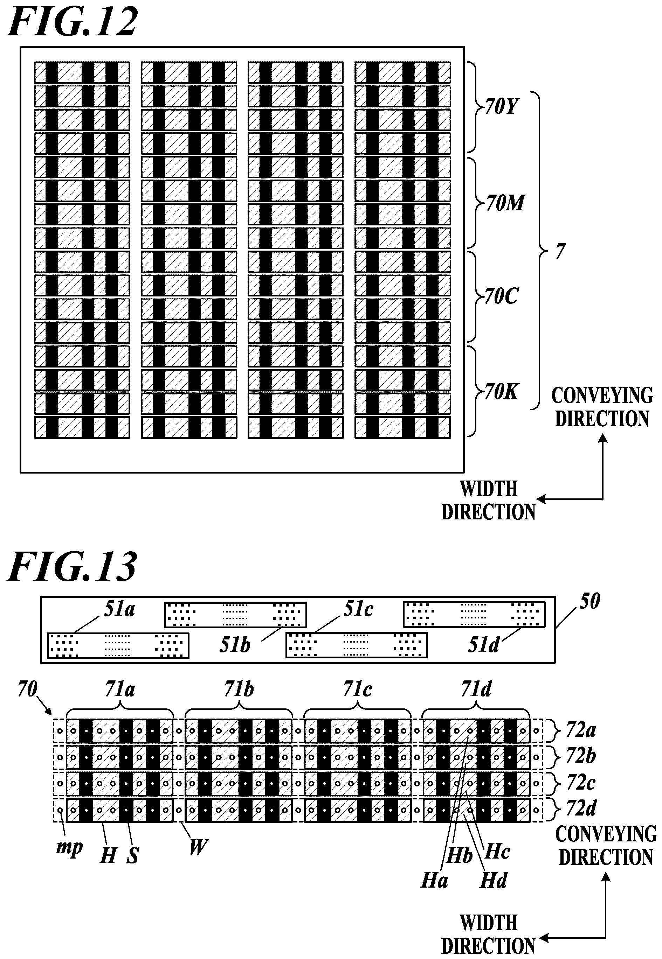

According to the adjustment method of the present embodiment, an optical measurement by the spectral colorimeter 3 is performed on the test chart 7 (FIG. 13) including the halftone region H in which the halftone image is recorded, the solid region S in which the solid image is recorded, and the non-recorded region W in which the image is not recorded. From the measured result of each region, the halftone reflection rate RH, the ink surface reflection rate RS, and the medium surface reflection rate RM in the right side of the formula (2) are obtained. Among the above, the optical measurement on the halftone region H and the solid region S is performed at the timing in which the progress of the curing reaction is almost the same after the irradiation of ultraviolet rays ends. That is, the optical measurement is performed on the halftone region H and the solid region S so that the difference of the elapsed time from the start of the ultraviolet ray irradiation to the start of the measurement is within a predetermined reference difference between the halftone region H and the solid region S. If the timing of the start of the ultraviolet ray irradiation to the halftone region H and the solid region S by the fixer 24 is close or the same, the difference of the elapsed time can be made within a predetermined reference difference by performing the optical measurement of the halftone region H and the solid region S by the spectral colorimeter 3 within a predetermined reference time difference. Such reference difference is determined based on a correlation between a size of the difference of the elapsed time and the size of the error included in the index value Df so that the error of the index value Df is within an allowable range. For example, a time difference (for example, about a few tens of seconds) for optical measurement according to the difference in the position between the halftone region H and the solid region S is acceptable if the halftone region H and the solid region S are recorded in different positions on the same recording medium M and the optical measurement is performed in each region.

The error due to the change in time in the halftone reflection rate RH and the ink surface reflection rate RS occurring with the progress of the curing reaction is small in the index value Df calculated based on the halftone reflection rate RH and the ink surface reflection rate RS obtained as described above. Therefore, the index value Df is a value which almost accurately reflects the actual ink coverage rate r on the recording medium M. Therefore, by using the index value Df, the ink amount adjustment can be performed more accurately than the conventional adjustment method.

Here, the method to obtain the characteristic value regarding the reflection rate from the measured result (spectral reflection rate characteristic) of the spectral colorimeter 3 is described.

FIG. 11A shows a spectral reflection rate characteristic for the YMCK ink used in the inkjet recording device 1 according to the present embodiment. The wavelength band showing the low reflection rate in the spectral reflection rate characteristic for each ink has high sensitivity with relation to the density of the recorded image for each ink. FIG. 11B shows a contribution rate (Weight) with relation to the CIE-XYZ tristimulus values for each wavelength obtained from defining the tristimulus values XYZ in the CIE-XYZ color system.

It is possible to understand from FIG. 11A and FIG. 11B that in the yellow ink, the stimulus value Z (Z value) among the tristimulus values has a high sensitivity with relation to the density of the image recorded in yellow ink. That is, the stimulus value Z can be used as the characteristic value regarding the reflection rate (characteristic value which is the value according to the reflection rate) in the image recorded with yellow ink.

In the magenta ink and the black ink, the stimulus value Y (Y value) among the tristimulus values has a high sensitivity with relation to the density of the image recorded with each ink. That is, the stimulus value Y can be used as the characteristic value regarding the reflection rate in the image recorded with magenta ink and black ink.

In the cyan ink, the stimulus value X (X value) among the tristimulus values has a high sensitivity with relation to the density of the image recorded with cyan ink. However, the stimulus value X has a contribution rate which cannot be ignored in the wavelength band with a large change over time in the reflection rate according to the progress of the curing reaction in the ultraviolet curing ink used in the inkjet recording device 1. Therefore, according to the present embodiment, in order to avoid disturbance factors beforehand, the stimulus value Y value is used as the characteristic value regarding the reflection rate for the cyan ink.

FIG. 12 is a diagram showing an example of a test chart 7 used in adjusting the driving voltage (ink droplet amount) according to the present embodiment.

The test chart 7 includes test patterns (driving voltage adjustment pattern) 70Y, 70M, 70C, and 70K (hereinafter referred to as test pattern 70 if the color does not have to be discriminated) each recorded in ink discharged from the head units 50Y, 50M, 50C, and 50K. The configuration in the test patterns 70 are the same for each color with the exception of the ink color. The ink is discharged from the head unit 50 to the recording medium M conveyed by the conveying drum 21 at the suitable timing according to the conveying position and the test pattern 70 is recorded.

FIG. 13 is a diagram describing a relation between the head unit 50 and the test pattern 70, and the contents of the test pattern 70.

The test pattern 70 includes dot pattern regions 71a to 71d (hereinafter referred to as dot pattern region 71 if the dot pattern regions do not have to be discriminated) which is recorded by the ink discharged from the nozzle 53 of the head modules 51a to 51d in the head unit 50. The dot pattern region 71 includes a solid region in which the solid image is recorded and a halftone region H in which a halftone image in a predetermined halftone pattern is recorded.

In the dot pattern region 71, the three regions among the regions divided evenly in eight in the width direction are to be the solid regions S and the remaining five regions are to be the halftone regions H with the solid regions S being sandwiched.

Between each of the dot pattern regions 71a to 71d, and outside both edges of the dot pattern regions 71a to 71d in the width direction, non-recording regions W in which the image is not recorded are provided.

The test pattern 70 is divided into four regions in the conveying direction, specifically, pattern regions 72a to 72d. The pattern regions 72a to 72d are each recorded by the ink discharge from the inkjet heads 52a to 52d (see FIG. 3) in the head module 51. The pattern regions 72a to 72d (hereinafter referred to as pattern region 72 if the pattern regions do not have to be discriminated) are recorded so as to extend in a predetermined intersecting direction which intersects with the conveying direction (width direction orthogonal to the conveying direction according to the present embodiment), and in each pattern region 72, the halftone region H, the solid region S, and the non-recording region W are arranged along the intersecting direction. The halftone region H in each of the pattern regions 72a to 72d is recorded by the corresponding single inkjet head 52, and the solid region S is recorded by the one or two or more inkjet heads 52 including the corresponding inkjet head 52. Below, the halftone regions H included in each of the pattern regions 72a to 72d are each referred to as halftone regions Ha to Hd.

FIG. 13 shows a measured point mp in which optical measurement is performed by the spectral colorimeter 3.

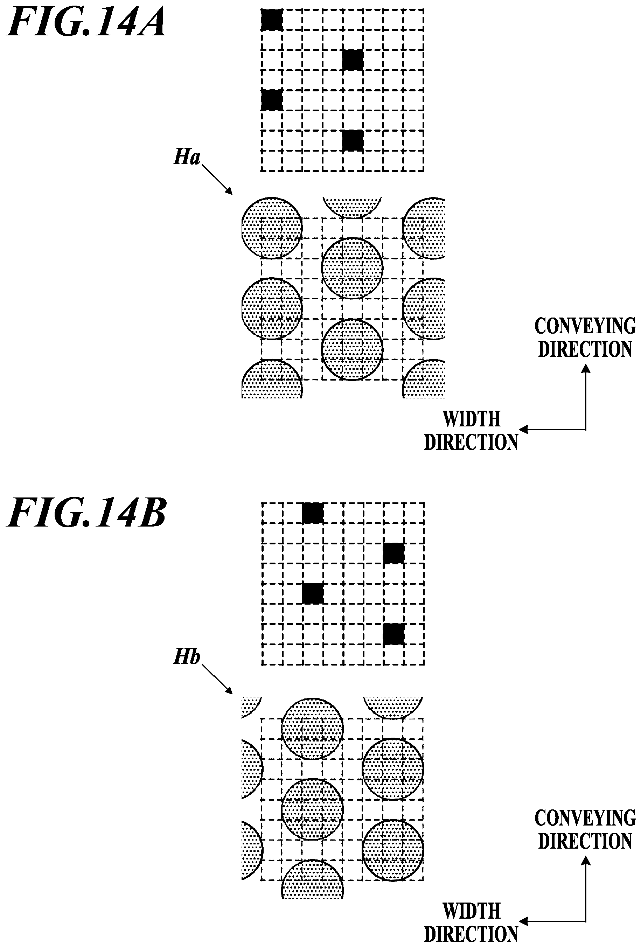

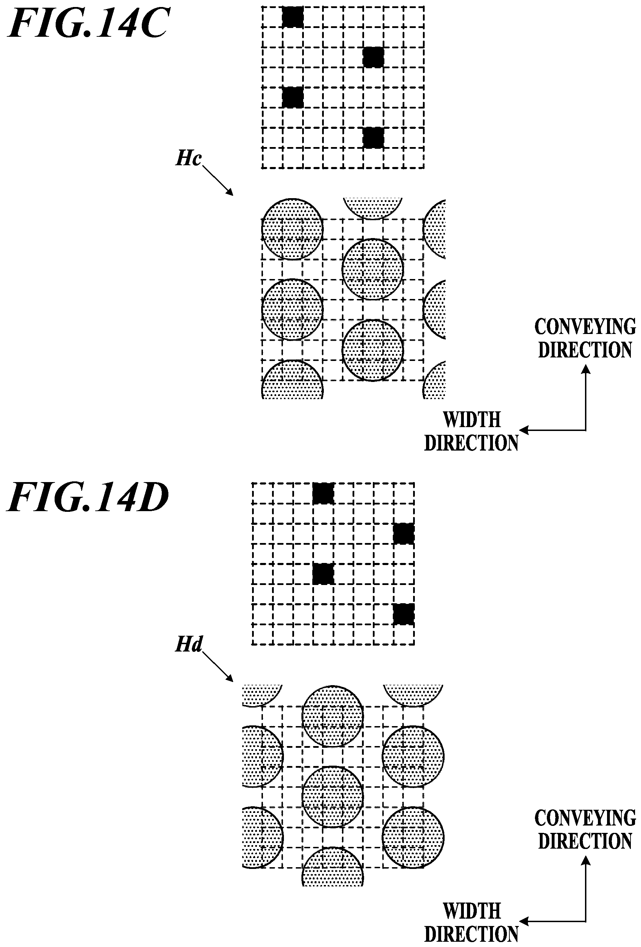

FIG. 14A to FIG. 14D are diagrams showing the arrangement of the pixel data in the image data used to record the halftone image in the halftone regions Ha to Hd and the dot arrangement of the ink in the halftone image recorded based on the image data. FIG. 14A shows the image data regarding the halftone region Ha of the pattern region 72a and the dot arrangement of the ink, FIG. 14B shows the image data regarding the halftone region Hb of the pattern region 72b and the dot arrangement of the ink, FIG. 14C shows the image data regarding the halftone region Hc of the pattern region 72c and the dot arrangement of the ink, and FIG. 14D shows the image data regarding the halftone region Hd of the pattern region 72d and the dot arrangement of the ink. That is, FIG. 14A to FIG 14D are diagrams regarding the halftone images recorded by the inkjet heads 52a to 52d, respectively. As described above, if the halftone image is recorded by each inkjet head 52a to 52d, image data with different patterns are used.

Each of the squares arranged in a matrix shown in the upper half of FIG. 14A to FIG. 14D shows pixels in the image data. The black pixels show pixels in which ink is discharged, and the white pixels show pixels in which ink is not discharged.

The lower half of FIG. 14A to FIG. 14D shows dots formed by the droplets of one of the ink colors which are discharged from the nozzle 53 and which land on the recording medium M based on the image data shown in the upper half of the diagrams. Each square arranged in a matrix in the lower half of FIG. 14A to FIG. 14D show the recorded pixel on the recording medium in which ink is discharged from one nozzle 53. The arrangement interval in the width direction is equal to an arrangement interval d of the nozzle 53 in the head module 51. The circle with the dot shows the range in which one ink droplet wets and spreads when the one ink droplet lands on the recorded image.

As shown in the lower half of FIG. 14A to FIG. 14D, the ink droplet discharged from each nozzle 53 wets and spreads in the range according to the droplet amount after landing on the recording medium M. According to the present embodiment, in the halftone region H, the image data pattern and the ink droplet amount are adjusted so that the dot diameter (diameter) of the ink after wetting and spreading is to be three times the arrangement interval d of the nozzle 53 in the head module 51 and the dots after wetting and spreading do not connect to each other. As described above, dots of ink in a predetermined size are positioned in advance to form the halftone image used as the test chart 7 according to the present embodiment.

The image data shown in FIG. 14A to FIG. 14D are recorded by discharging ink from every fourth nozzle 53 in the width direction (there are three nozzles 53 in between), and therefore, recording can be performed by the single inkjet head 52 (FIG. 3) in the head module 51.

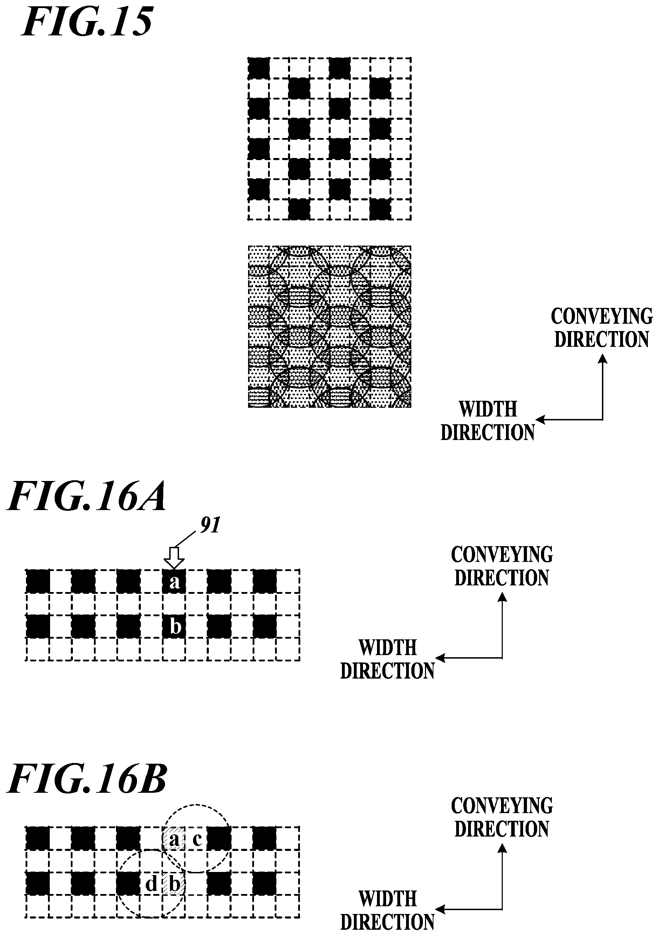

FIG. 15 is a diagram showing an arrangement of the pixel data in the image data used to record the solid image in the solid region (upper half) and the dot arrangement of the ink in the halftone image recorded based on the image data (lower half). The solid image is an image including a region in which the surface of the recording medium M is completely covered by ink.

According to the present embodiment, the dot diameter of the ink on the recording medium M is three times the arrangement interval d of the nozzle 53 in the head module 51. Therefore, as shown in the upper half of FIG. 15, the ink is discharged in every other pixel (nozzle 53) in the width direction and the conveying direction. With this, as shown in the lower half of FIG. 15, the entire surface of the recording medium M can be covered by ink to form the solid image. The image data in the upper half of FIG. 15 is recorded by ink discharge from every other nozzle 53 in the width direction, and therefore, two among the four inkjet heads 52 (FIG. 3) in the head module 51 can be used for recording.

The solid image can be recorded based on the image data in which ink discharge is performed in all pixels.

Described here is the reason why the droplet amount in which the dot diameter of the ink which lands on the recording medium M becomes three times the arrangement interval d of the nozzle 53 is suitable as the ink droplet amount discharged from the nozzle 53.

If a discharge failure nozzle which cannot discharge ink normally is detected in the inkjet recording device 1 according to the present embodiment, the ink discharge is not performed from the discharge failure nozzle, and the ink amount which is not discharged from the discharge failure nozzle is complemented by the ink discharge from the nozzle 53 adjacent to the discharge failure nozzle in the width direction.

FIG. 16A and FIG. 16B are diagrams describing a method to complement the discharge failure nozzle.

Here, if the image is recorded based on the image data shown in FIG. 16A, the nozzle 53 which discharges ink corresponding to the pixels a, b in FIG. 16A is to be the discharge failure nozzle. The discharge failure nozzle can be detected by recording on the recording medium M a predetermined test image in which the ink discharge state can be detected for each nozzle 53, and analyzing the imaged result of the test image with the line sensor 25. According to the example shown in FIG. 16A, the ink is not discharged in the position of the pixels a, b. Therefore, if the ink which is not discharged is not complemented, a region with a low density appears in the position and along the direction shown with the arrow 91 in the recorded image, and this can be confirmed by sight as a streak.

Therefore, as shown in FIG. 16B, substitute ink is discharged from pixel c adjacent to pixel a and pixel d adjacent to pixel b. This complements the ink which is not discharged in pixels a, b and suppresses lack of density from occurring. Here, in order to fill the region of the pixel a (pixel b) with the complementing dot by the ink discharged in pixel c (pixel d), at least the diameter of the formed dot needs to be three times or more than the arrangement interval d of the nozzle 53. If the dot diameter is too large, the quality of the halftone image reduces. Therefore, preferably, the nozzle diameter is close to three times the arrangement interval d of the nozzle 53.

The arrangement interval d of the nozzle 53 in the inkjet recording device 1 according to the present embodiment is about 21.2 $\mu$m (1200 dpi). Therefore, the desirable recording dot diameter considering complementing the discharge failure nozzle is about 63.5 $\mu$m.

As described above, preferably, from the viewpoint of performing suitable complementing, the dot diameter formed by the ink droplet is three times the arrangement interval d of the nozzle 53.

The number of discharged ink droplets if the halftone is recorded is determined based on the dot diameter being three times the arrangement interval d. Therefore, if the dot diameter is shifted from three times the arrangement interval d, the ink coverage rate in the halftone image is shifted from the desired value and an error occurs in the density of the recorded halftone. From this point also, it is preferable that the dot diameter formed by the ink droplet matches with three times the arrangement interval d of the nozzle 53. That is, the droplet amount of the ink discharged from the nozzle 53 is preferably the amount so that the dot diameter becomes three times the arrangement interval d.

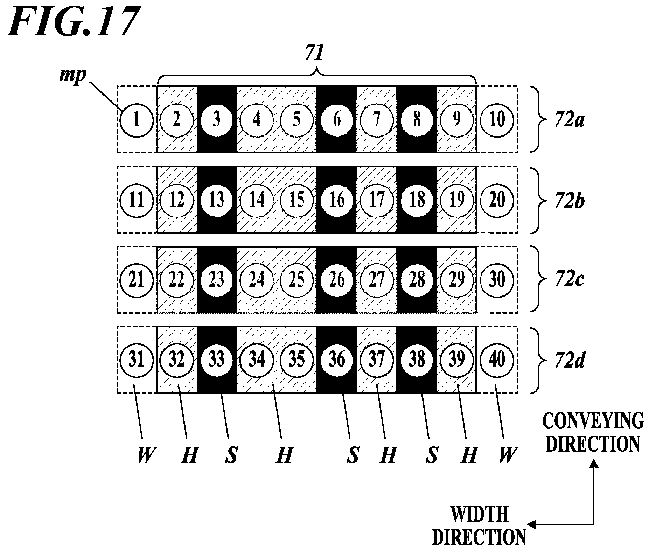

FIG. 17 is a diagram extracting one dot pattern region 71 and a non-recording region W adjacent to the dot pattern region 71. FIG. 17 shows a measured point number to identify the position where the optical measurement is performed by the spectral colorimeter 3 with a number surrounded by a circle.

The index value Df can be obtained for each pattern region 72 from the above formula (2) based on the result measured by the spectral colorimeter 3 of each measured point mp in the pattern region 72. The ink droplet amount (driving voltage Von, Voff) can be adjusted for each inkjet head 52 based on the index value Df.

Specifically, if the ink droplet amount of the inkjet head 52a is adjusted, the measured result of the pattern region 72a is used. That is, the halftone reflection rate RH (stimulus value Y or stimulus value Z) is obtained from the measured result of the halftone region H with the measured point numbers 2, 4, 5, 7, 9 recorded by only the ink discharged from the inkjet head 52a. The ink surface reflection rate RS (stimulus value Y or stimulus value Z) is obtained from the measured result of the solid region S with the measured point numbers 3, 6, 8 recorded by ink including the ink discharged from the head module 51a. The medium surface reflection rate RM (stimulus value Y or stimulus value Z) is obtained from the measured result in the non-recorded region W with the measured point numbers 1, 10. The index value Df is calculated by the formula (2). Then, based on the obtained index value Df, the setting value of the driving voltages Von, Voff (head voltage coefficient HVC) is obtained according to a predetermined algorithm using the setting parameter stored in the storage 44. The obtained head voltage coefficient HVC is stored in the storage 44 for each inkjet head 52.

Similarly for each inkjet head 52b to 52d, the index value Df is calculated from the measured result with the measured point number 11 to 20, 21 to 30, and 31 to 40. Then, the driving voltages Von, Voff after correction are set.

The above-described algorithm is as described below according to the present embodiment.

That is, the algorithm according to the present embodiment uses a reference index value Dt determined in advance for each ink color and a correlation value Hvs showing the correlation between the head voltage correlation HVC and the index value Df as a setting parameter. Here, the reference index value Dt is the index value obtained by performing the optical measurement under the predetermined environment on the halftone image of the predetermined halftone pattern recording the predetermined dot diameter and calculating with the formula (2) based on the measured result. The reflection rate in the edge of the dot formed by the ink droplet may be different from the center of the dot, and the suitable reference index value Dt cannot be obtained by a simple weighting calculation according to the coverage rate. Preferably, the reference index value Dt is obtained by actual measurement under the predetermined environment as described above. The correlation value Hvs is a ratio of a change amount $\Delta$Df of the index value Df with relation to a change amount $\Delta$HVC of the head voltage coefficient HVC near the reference index value Dt of the halftone image (= $\Delta$Df/$\Delta$HVC). The reference index value Dt and the correlation value Hvs are stored in the storage 44 in advance.

In the adjustment of the head voltage coefficient HVC, first, a difference Dd = Dt-Df is calculated from the index value Df obtained from the measured result of the test pattern 70 as described above and the reference index value corresponding to the ink color of the adjustment target. Then, the value multiplying the correlation value Hvs to the difference Dd is added to the head voltage coefficient HVC before adjustment. With this, the head voltage coefficient HVC after adjustment is obtained.

The method to obtain the head voltage coefficient HVC after adjustment is not limited to the above, and for example, for each color of ink, table data storing the index value Df and the head voltage coefficient HVC after adjustment corresponded to each other can be prepared, and the head voltage coefficient HVC after adjustment can be obtained by referring to the table data based on the obtained index value Df.

The measured points mp for the measurement numbers 1 to 10 in the pattern region 72a shown in FIG. 17 are arranged along the width direction. Therefore, the measurement within a predetermined reference time difference can be easily performed by the spectral colorimeter 3. The same can be said for the measured point numbers 11 to 20, 21 to 30, and 31 to 40.

As described above, the irradiating operation of the ultraviolet rays by the fixer 24 on the line parallel to the width direction on the recording medium M ends at the same timing.

Therefore, in the measurement of the measured points mp for the measured point numbers 1 to 10, the optical measurement by the spectral colorimeter 3 is performed at the timing that the difference of the elapsed time from the irradiating of the ultraviolet rays to the measurement between the halftone region H and the solid region S is within a predetermined reference difference. Therefore, for each of the halftone region H and the solid region S, the optical measurement is performed at the timing that the change over time of the reflection rate due to the progress of the curing reaction of ink is the same. Therefore, the error due to the change over time of the halftone reflection rate RH and the ink surface reflection rate RS in the index value Df calculated by the formula (2) can be made small.

Next, the control process by the controller 40 performing the driving voltage adjustment process to adjust the driving voltages Von, Voff of the driving signal of the inkjet head 52 is described.

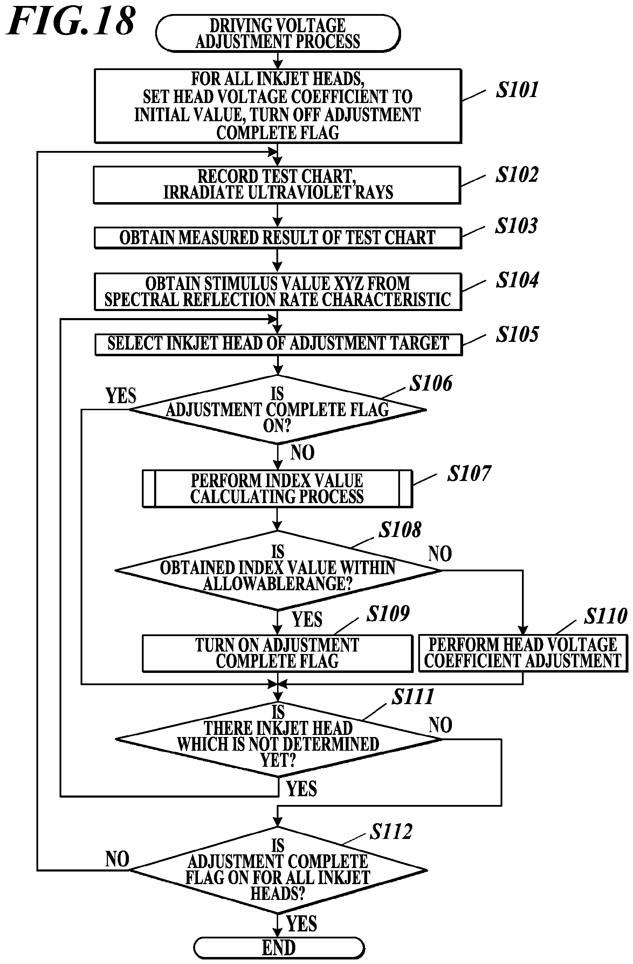

FIG. 18 is a flowchart showing a control process of a driving voltage adjustment process.

The driving voltage adjustment process starts when the inkjet recording device 1 is manufactured (the head unit 50 is assembled) or when a predetermined adjustment process starting condition is satisfied. The adjustment process starting condition may be, for example, ink discharge in an amount equal to or larger than a predetermined amount after the last driving voltage adjustment process, and image recording on the recording medium M in an amount equal to or more than a predetermined number of sheets or more. The driving voltage adjustment process can be started according to the user instruction when the variation in color is detected in the recorded image or the predetermined test image due to the variation in the ink discharge amount from each inkjet head 52.

When the driving voltage adjustment process starts, the controller 40 sets the head voltage coefficient HVC for all of the inkjet heads 52 in all of the head modules 51 to an initial value (for example, 0.80) set in advance. The controller 40 secures a region of an adjustment complete flag showing the adjustment completed in each inkjet head 52 in the RAM 42, and turns off the adjustment complete flag (sets to incomplete state) (step S101). Here, the head voltage coefficient HVC set in each inkjet head 52 is recorded in the storage 44 as a temporary setting value. The initial value of the head voltage coefficient HVC may be different for each ink color.

The controller 40 operates each unit of the image recorder 20 based on the image data of the test chart 7 stored in the storage 44 and starts the process of recording the test chart 7 on the recording medium M, and irradiating ultraviolet rays with the fixer 24 to cure and fix the ink (step S102: recording step, fixing step). When the test chart 7 is recorded, even if the ink is discharged at the same droplet amount, the way the ink wets and spreads on the recording medium, that is, the dot diameter on the recording medium M is different depending on the state of processing the surface of the recording medium M. This applies an influence on the adjusted result of the driving voltage. Therefore, the test chart 7 is printed on the predetermined standard recording medium M. In the inkjet recording device 1 according to the present embodiment, a specific glossy coated sheet in which the spreading of the ink is relatively small is used as the standard recording medium M on which the test chart 7 is printed.

After the process in step S102 ends, the optical measurement by the spectral colorimeter 3 on the test chart 7 recorded on the recording medium M is performed. After the optical measurement ends, the controller 40 obtains a measured result regarding the predetermined measured point mp in the test chart 7, that is, the spectral reflection rate characteristic from the spectral colorimeter 3 through the spectral colorimeter interface 65 (step S103: first reading result obtaining step, second reading result obtaining step).

The controller 40 calculates the tristimulus values of the CIE-XYZ color system from the spectral reflection rate characteristic for the predetermined measured points mp in the test chart 7 and temporarily stores the result in the RAM 42 corresponded with each measured point mp (step S104). The calculation of the tristimulus values can be performed each time that the spectral reflection rate characteristic of each measured point mp is received from the spectral colorimeter 3 or the calculation of the tristimulus values of each measured point mp can be performed collectively after the spectral reflection value for all measured points mp are received.

The controller 40 selects one inkjet head 52 as the adjustment target according to the standard order of the inkjet head 52 (step S105). The order of selection of the inkjet head 52 is not limited, and according to the present embodiment, the selection is made in the order of the inkjet heads 52a to 52d of the head module 51a, and then, the selection is made in the order of the inkjet heads 52a to 52d for each head module 51b to 51d.

The controller 40 determines whether the adjustment complete flag is on (adjustment is completed) for the selected inkjet head 52 (step S106).

When it is determined that the adjustment complete flag is off ("NO" in step S106), the controller 40 performs the later-described index value calculating process and calculates the index value Df for the selected inkjet head 52 (step S107).

The controller 40 determines whether the obtained index value Df is within the predetermined allowable range (step S108). Here, the allowable range is the range in which the difference from the above-described reference index value Dt is within a predetermined allowable error De. That is, the controller 40 determines whether the index value Df is within a predetermined allowable range if the index value Df satisfies |Df-Dt| ≤ De. The allowable error De is stored in the preset storage 44.

If it is determined that the index value Df is within the allowable range ("YES" in step S108), the controller 40 sets the adjustment complete flag to on for the selected inkjet head 52 (step S109).

If it is determined that the index value Df is not within the allowable range ("NO" in step S108), the controller 40 obtains the adjusted value of the head voltage coefficient HVC according to the above described algorithm, sets the head voltage coefficient HVC to the value after adjustment, and stores the result in the storage 44 (step S110: setting step).

If the process in step S109 or step S110 ends, or if it is determined that the adjustment complete flag is on in the process in step S106 ("YES" in step S106), the controller 40 determines whether there is an inkjet head 52 in which the determination is not made yet (that is, there is an inkjet head 52 not yet selected according to the standard order) (step S111). If it is determined that there is an inkjet head 52 in which the determination is not made yet ("YES" in step S111), the controller 40 advances the process to step S105.

If it is determined that there are no inkjet heads 52 in which the determination is not made yet ("NO" in step S111), the controller 40 determines whether the adjustment complete flag is on for all of the inkjet heads 52 (step S112), and if it is determined that there is the adjustment complete flag for the inkjet head 52 that is off ("NO" in step S112), the process progresses to step S102. If it is determined that the adjustment complete flag is on for all of the inkjet heads 52 ("YES" in step S112), the controller 40 ends the driving voltage adjustment process.

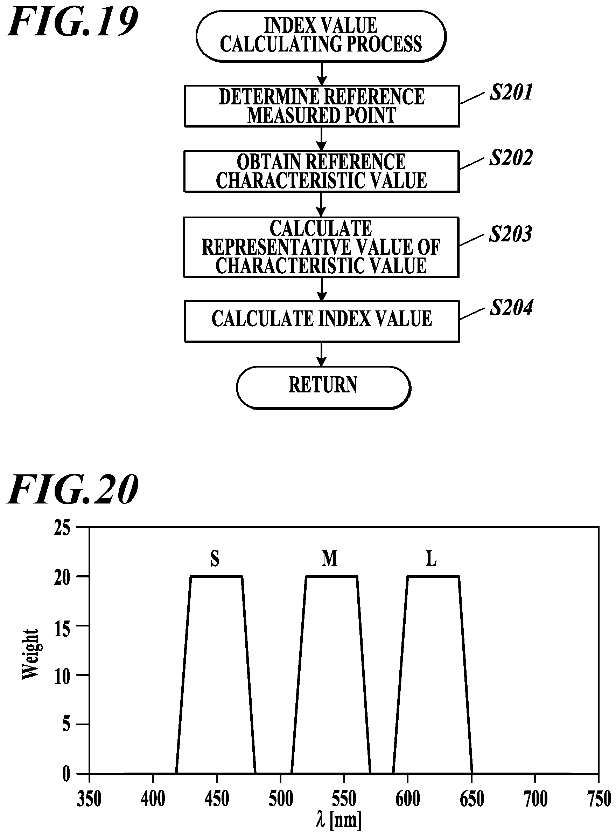

FIG. 19 is a flowchart showing a control process of the index value calculating process.

If the index value calculating process is called, the controller 40 determines the measured point mp in which the measured result is referred to obtain the index value Df of the inkjet head 52 as the adjustment target (step S201). For example, among the measured points mp with the measured point numbers 1 to 10, 11 to 20, 21 to 30 and 31 to 40 as shown in FIG. 17, the measured point mp corresponding to the selected inkjet head 52 is determined to be the reference target.

The controller 40 obtains one stimulus value (stimulus value Y or stimulus value Z) determined in advance for each ink color from the tristimulus values of the CIE-XYZ color system calculated for each measured point mp determined in step S201 as the referred characteristic value (reflection rate of the non-recording region W, reflection rate of the halftone gradation region H, reflection rate of the solid region S) (step S202).

From the characteristic value of the measured points mp obtained in step S202, the controller 40 calculates the medium surface reflection rate RM which is the representative value of the reflection rate of the non-recording region W, the halftone reflection rate RH which is the representative value of the reflection rate of the halftone region H, and the ink surface reflection rate RS which is the representative value of the reflection rate of the solid region S (step S203).

Some dots may not be recorded in the halftone region H and the solid region S due to the failure in the discharge of the nozzle 53. The position corresponding to the discharge failure nozzle shows a higher reflection rate than the other position where there is no discharge failure. It is not possible to determine whether there is a discharge failure nozzle in the measured point mp from only the obtained characteristic value (reflection rate). Therefore, regarding each of the halftone region H and the solid region S, from the lowest reflection rate among the obtained reflection rates for the plurality of measured points mp, the average value of the reflection rate within a predetermined first reference range considering the error of the measuring instrument is calculated as the representative value and is determined as the halftone reflection rate RH and the ink surface reflection rate RS. The reflection rate within the first reference range from the lowest reflection rate among the reflection rates of the plurality of measure points mp corresponds to the characteristic value which satisfies a reliability condition regarding the reliability of the characteristic value.

In the non-recording region W, there are rare cases in which the ink attached to the ink discharge surface of the inkjet head 52 falls or the ink attaches by abnormal ejection due to abnormalities in the nozzle 53 (malfunction). It is not possible to determine whether ink is attached to the measured point mp only by the obtained characteristic measurement (reflection rate). Therefore, from the highest reflection rate among the reflection rate in the plurality of measured points mp obtained in the non-recording region W, the average value of the reflection rate within the predetermined second reference range considering the error of the measuring instrument is calculated as the representative value and is determined as the medium reflection rate RM. The reflection rate within the second reference range from the highest reflection rate among the reflection rates of the plurality of measured points mp corresponds to the characteristic value which satisfies the reliability condition regarding the reliability of the characteristic value.

The representative value is not limited to the average value and may be a median value.

The controller 40 calculates the index value Df using the formula (2) from the medium surface reflection rate RM, the halftone reflection rate RH, and the ink surface reflection rate RS calculated in step S203 (step S204: coverage rate information obtaining step).

If the process in step S204 ends, the controller 40 returns the process to the driving voltage adjustment process.

(Modification)

Next, a modification of the above-described embodiment is described. The modification is different from the above embodiment in that the characteristic value (reflection rate) is obtained using only a part of the wavelength band among the reflection rate distribution of the spectral reflection rate characteristics measured by the spectral colorimeter 3. The differences from the above embodiment are described below.

The modification is obtained based on the spectral reflection rate characteristics. Instead of the tristimulus values of the CIE-XYZ color system, a representative value of the reflection rate in the specific wavelength band of the visible light determined for each color of ink is used as the characteristic value which is obtained based on the spectral reflection rate characteristic and which is regarding the reflection rate. Specifically, the index value Df is obtained based on the representative value of the reflection rate in a part of the wavelength band including the wavelength where the value becomes the maximum value in the difference between the reflection rate in the spectral reflection rate characteristic of the non-recording region W and the reflection rate in the spectral reflection characteristic in the solid region S.

According to the spectral reflection rate characteristics for each of the YMCK ink shown in FIG. 17A, the low spectral reflection rate can be seen in the wavelength band with a wavelength shorter than 470 nm for the yellow ink, the wavelength band in the range of 520 nm to 560 nm for the magenta ink, the wavelength band with a wavelength longer than 600 nm for the cyan ink, and the wavelength band in the range of 380 nm to 730 nm for the black ink. It can be understood that there is high sensitivity in the specific wavelength band with relation to the density of the image recorded with the ink of each color.

According to the modification, three wavelength bands representing the above wavelength bands are set, specifically, a long wavelength band 600 nm to 640 nm, a middle wavelength band 520 nm to 560 nm, and a short wavelength band 430 nm to 470 nm. The following are used instead of the tristimulus values used in the above-described embodiment, the reflection rate of the long wavelength band (hereinafter also referred to as L reflection rate) which is the representative value of the spectral reflection rate in the long wavelength band (According to the present invention, the representative value of the spectral reflection rate refers to the reflection rate when the light including the above wavelength band is irradiated, and can be a reflection rate of irradiating light with a single wavelength or can be a reflection rate of irradiating light with a wavelength including a certain band, and if the wavelength includes a certain band, the representative value is the average value of the reflection rate of the wavelengths. Here, in the wavelength including the certain band, a portion of the bands can be overlapped. For example, as the representative value of the spectral reflection rate for the long wavelength band, the representative value can be obtained by the average reflection rate of light included within 600 nm to 640 nm, and if the irradiation of light includes components other than 600 nm to 640 nm, the representative value can be obtained by the average reflection rate including the reflection rate of the components other than 600 nm to 640 nm. The same applies below), the reflection rate of the middle wavelength band which is the representative value of the spectral reflection rate in the middle wavelength band (hereinafter also referred to as M reflection rate), and the short wavelength band (hereinafter also referred to as S reflection rate) which is the representative value of the spectral reflection rate in the short wavelength band (hereinafter also referred to as S reflection rate). Below, a group of characteristic values including the L reflection rate, the M reflection rate and the S reflection rate is shown as the LMS characteristic value.

FIG. 20 shows the contribution rate (Weight) for each wavelength to the LMS characteristic value corresponding to the contribution rate (Weight) to the tristimulus value of the CIE-XYZ color system shown in FIG. 11B.

According to the present modification, the index value Df is calculated using the S reflection rate for the image recorded with the yellow ink. The index value Df is calculated using the M reflection rate for the image recorded with the magenta ink or the black ink. The index value Df is calculated using the L reflection rate for the image recorded with the cyan ink or the black ink.

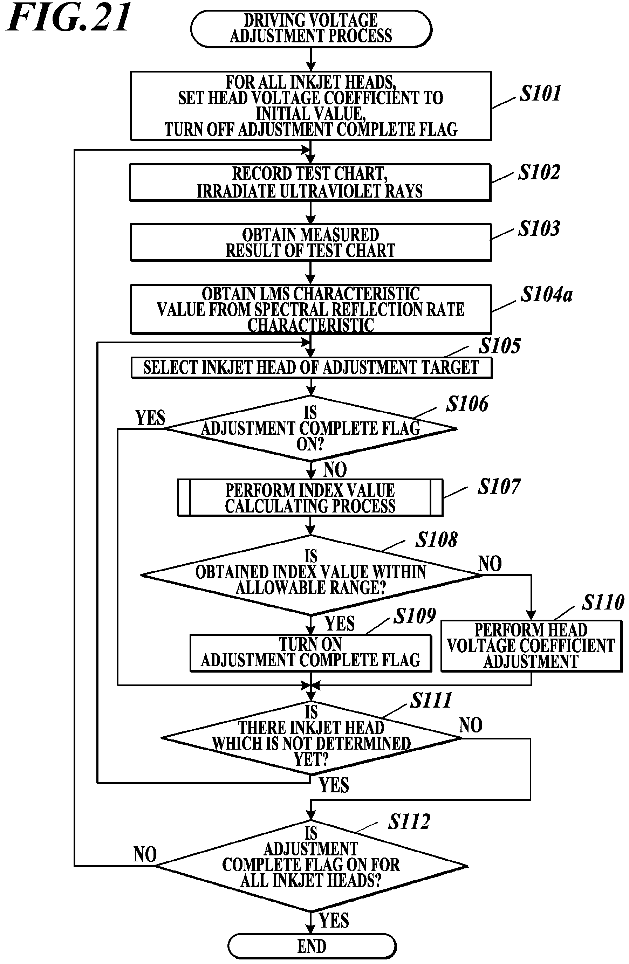

FIG. 21 is a flowchart showing a control process of the driving voltage adjustment process according to the present modification.

Step S104 shown in the flowchart in FIG. 18 is changed to step S104a in the flowchart in FIG. 21. Below, the description is omitted for the process in the step where there is no change.

According to the process in step S104a, the controller 40 calculates the LMS characteristic value (L reflection rate, M reflection rate, and S reflection rate) from the spectral reflection rate characteristic for the predetermined measured point mp in the test chart 7, and the controller temporarily stores the result in the RAM 42 corresponded with each measured point mp. The calculation of the LMS characteristic value can be performed each time the spectral reflection rate characteristic for each measured point mp is received from the spectral colorimeter 3 or the calculation of the LMS characteristic value for each measured point mp can be performed collectively after receiving the spectral reflection rate for all measured points mp.

According to the process in step S202 in the flowchart of the index value calculating process shown in FIG. 19, the controller 40 obtains one reflection rate (L reflection rate, M reflection rate, or S reflection rate) determined in advance for each ink color from the LMS characteristic value calculated for each measured point mp determined in step S201 as the referred characteristic value (reflection rate of the non-recording region W, reflection rate of the halftone region H, reflection rate of the solid region S).

As described above, the ink discharge operation adjustment method according to the present embodiment is an ink discharge operation adjustment method which adjusts the ink discharge operation by the head unit group HU in which ink droplets are discharged from the nozzle 53. The method includes the following steps. In a recording step, in the head unit group HU, the ink droplet is discharged from the nozzle 53 onto a recording medium M and a halftone region H (halftone image) in which ink is discharged in a predetermined halftone pattern and a solid region S (solid image) in which the surface of the recording medium M is completely covered by ink are recorded. In the fixing step, the fixer 24 starts the curing of the ink landed on the recording medium M discharged from the nozzle 53 and the fixing to the recording medium M. In a first reading result obtaining step, the measured result by the spectral colorimeter 3 is obtained for the non-recording region W in which the image is not recorded on the recording medium M. In a second reading result obtaining step, the measured result for the halftone region H and the solid region S is obtained so that the difference of the elapsed time from the start of curing by the fixer 24 to the optical measurement by the spectral colorimeter 3 is within a predetermined reference difference between the halftone region H and the solid region S. In a coverage rate information obtaining step, based on the measurement result by the spectral colorimeter 3 of the non-recording region W, halftone region H, and the solid region S, the index value Df (coverage rate information) regarding the coverage rate r of the ink in the halftone region H is obtained. In a setting step, based on the index value Df, the setting regarding adjustment of the droplet amount of ink discharged from the nozzle 53 is performed.

According to the above method, the optical measurement of the halftone region H and the solid region S is performed at the timing in which the progress of the curing reaction in the ink is substantially the same. In order to obtain the index value Df based on the measured result, the error included in the obtained index value needs to be suppressed. Such error occurs due to increase of the reflection rate in response to progress of the curing reaction. Since the ink droplet amount is adjusted based on the index value Df obtained as described above, the shift in the adjustment amount due to increase of the reflection rate in response to progress of the curing reaction can be suppressed. After the ultraviolet ray irradiation ends, the optical measurement of the halftone region H and the solid region is performed while the curing reaction progresses in the ink, and therefore the adjustment can be performed in a shorter amount of time. As described above, according to the above-described method, the droplet amount of the ink discharged from the nozzle 53 can be adjusted in a short amount of time and with more accuracy.

The recording step records the halftone region H and the solid region S on one recording medium M. By performing the optical measurement of the halftone region H and solid region S recorded as described above, the difference of the elapsed time from the irradiation of the ultraviolet rays to the optical measurement by the spectral colorimeter 3 for each of the halftone region H and the solid region S can be easily made small.

In the second reading result obtaining step, the measured result is obtained by using the spectral colorimeter 3 to measure within a predetermined reference time difference at least a part of the halftone region H and at least a part of the solid region S on the recording medium M. With this, the difference of the elapsed time from the irradiation of ultraviolet rays to the optical measurement by the spectral colorimeter 3 for each of the halftone region H and the solid region S can be made small.

In the recording step, the head unit group HU discharges the droplet of the ink from the nozzle 53 to the recording medium M conveyed by the conveying drum 21. The conveying unit conveys the recording medium M in the path which passes the landing range of the ink discharged from the nozzle 53 of the head unit group HU and the irradiating range of the light by the fixer 24. The head unit group includes a plurality of nozzles 53 provided throughout the recording width of the image in the width direction orthogonal to the conveying direction of the recording medium M by the conveyor. The recording step records on the one recording medium M conveyed by the conveyor with at least a portion of each of the halftone region H and the solid region S arranged in the intersecting direction. As described above, the halftone region H and the solid region S are recorded to be arranged in a predetermined direction. Therefore, the optical measurement of the halftone region H and the solid region S can be performed by the spectral colorimeter 3 easily in a short amount of time, that is, within a predetermined reference time difference.

In the first reading result obtaining step and the second reading result obtaining step, the measured result is obtained by the spectral colorimeter 3 performing the measurements within a predetermined reference time difference on at least a portion of each of the non-recording region W, halftone region H, and the solid region S on the one recording medium M. With this, it is possible to effectively suppress the error included in the index value Df due to the increase of the reflection rate in response to the progress of the curing reaction. By adjusting the ink droplet amount based on the index value Df obtained as described above, the shift in the adjustment amount due to the increase of the reflection rate in response to the progress of the curing reaction can be suppressed effectively.

In the recording step, the halftone region H and the solid region S are recorded so that at least a portion of the non-recording region W, the halftone region H, and the solid region S are arranged in the intersecting direction. In the first reading result obtaining step and the second reading result obtaining step, the measured result is obtained by the spectral colorimeter 3 measuring within a predetermined reference time difference for at least a portion of each of the non-recording region W, the halftone region H, and the solid region S on the recording medium. With this, the optical measurement on the non-recording region W, the halftone region H, and the solid region S can be performed under almost the same environment. Therefore, the error of the index value Df and the shift in the adjustment amount of the ink droplet amount due to the difference of the environment condition which may occur when the measurement is performed on the non-recording region W, the halftone region H, and the solid region S at a different timing or under different environment can be suppressed.

In the predetermined halftone pattern, the dots formed on the recording medium M by the ink discharge from the nozzle 53 are determined to be separated from each other. With this, the ink coverage rate in the halftone region H and the index value Df regarding the coverage rate can have a high correlation with the landed ink droplet amount. As a result, the adjustment of the ink droplet amount based on the index value Df can be performed more accurately.

In the predetermined halftone pattern, the diameter of the dot formed on the recording medium M by the ink droplet discharged from the nozzle 53 is determined to be three times the arrangement interval in the width direction of the plurality of nozzles 53. With this, the adjustment can be performed with the ink discharge amount to be able to obtain the dot diameter in which the complement of the discharge failure nozzle can be suitably performed.

In the coverage information obtaining step, from the measured result of the first reading result obtaining step and the second reading result obtaining step, the characteristic value regarding the reflection rate of the light is obtained for each of the non-recording region W, the recording region of the halftone region H, and the recording region of the solid region S, and obtains the index value D based on the characteristic value Df. With this, the index value Df regarding the coverage rate r of the ink can be obtained easily from the measured result of the optical measurement for the above regions.

The spectral colorimeter 3 is able to obtain the spectral reflection rate characteristics on the surface of the recording medium M and in the coverage rate information obtaining step, the characteristic value is obtained based on the spectral reflection rate characteristics of each of the non-recording region W, the halftone region H, and the solid region S obtained by the spectral colorimeter 3. With this, compared to the method based on the reflection rate of a specific narrow wavelength band, the characteristic value with high reliability can be obtained for each region.

The coverage rate information obtaining step obtains at least one of the tristimulus values in the CIE-XYZ color system as the characteristic value. With this, the characteristic value can be obtained by a simple method of obtaining the tristimulus values.

In the coverage rate information obtaining step, if the index value Df regarding the halftone region H recorded by the inkjet head 52 discharging yellow ink is obtained, the non-recording region W, and the halftone region H and the solid region S recorded by the inkjet head 52 are measured by the spectral colorimeter 3, and the index value Df is obtained based on the obtained stimulus value Z. If the index value Df regarding the halftone region H recorded by the inkjet head 52 discharging magenta ink, cyan ink, or black ink is obtained, the non-recording region W, and the halftone region H and the solid region S recorded by the inkjet head 52 are measured by the spectral colorimeter 3, and the index value Df is obtained based on the obtained stimulus value Y. With this, the index value Df can be obtained more accurately based on the stimulus value including high sensitivity with relation to the density of the image recorded with the ink of each color.

In the coverage rate information obtaining step according to the modification, the index value Df is obtained based on the representative value of the reflection rate in a part of the wavelength band including the wavelength in which the difference between the reflection rate in the spectral reflection rate characteristic of the non-recording region W and the reflection rate in the spectral reflection rate characteristic of the solid region S becomes the maximum value among the wavelength band of the visible light. With this, the index value Df can be obtained using only the reflection rate in the wavelength band in which the sensitivity become high with relation to the density of the image. Therefore, the adjustment of the ink droplet amount can be performed more accurately based on the more accurate index value Df (that is, close to the actual coverage rate r).

According to the above modification, if the index value Df regarding the halftone region H recorded by the inkjet head 52 discharging yellow ink is obtained, the index value Df is obtained based on the representative value of the spectral reflection rate in the wavelength band including at least a portion of the wavelength band of 430 nm to 470 nm (inclusive). If the index value Df regarding the halftone region H recorded by the inkjet head 52 discharging magenta ink or black ink is obtained, the index value Df is obtained based on the representative value of the spectral reflection rate in the wavelength band including at least a portion of the wavelength band of 520 nm to 560 nm (inclusive). If the index value Df regarding the halftone region recorded by the inkjet head 52 discharging cyan ink is obtained, the index value Df is obtained based on the representative value of the spectral reflection rate in the wavelength band including at least a portion of the wavelength band of 600 nm to 640 nm (inclusive). With this, a more accurate index value Df can be obtained using only the reflection rate in the wavelength band in which the sensitivity becomes high with relation to the density of the image recorded with each ink color.

In the coverage rate information obtaining step, the characteristic values in a plurality of different positions are obtained for each of the non-recording region W, the halftone region H, and the solid region S, the representative value of the characteristic value which satisfies the reliability condition regarding the reliability of the characteristic value among the characteristic values in the plurality of positions is determined, and the index value Df is obtained based on the representative value of each of the non-recording region W, halftone region H, and the solid region S. With this, a more accurate index value D can be obtained.

In the coverage rate information obtaining step, for each of the halftone region H and the solid region S, the representative value of the characteristic value which is within a predetermined first reference range is determined from the minimum value of the characteristic values in the plurality of positions. For the non-recording region W, the representative value of the characteristic value which is within a predetermined second reference range is determined from the maximum value of the characteristic values in the plurality of positions. With this, it is possible to suppress the error occurring in the index value Df due to the increase in the reflection rate in the halftone region H and the solid region S due to the ink discharge failure and the decrease of the reflection rate in the non-recording region W due to the unintentional attaching of ink to the surface of the recording medium M.

In the coverage rate information obtaining step, from the measured result by the spectral colorimeter 3, the medium surface reflection rate RM regarding the reflection rate of light in the non-recording region W, the halftone reflection rate RH regarding the reflection rate of light in the recording region of the halftone region H and the ink surface reflection rate RS regarding the light reflection rate in the recording region of the solid region S are obtained. The index value Df is obtained by the formula

$$Df = (RM - RH)/(RM - RS)$$

With this, the index value Df regarding the coverage rate r can be obtained easily from the medium surface reflection rate RM, the halftone reflection rate RH, and the ink surface reflection rate RS.

The head unit group HU discharges droplets of ink from the nozzle 53 by the predetermined driving signal, and in the setting step, the setting regarding the correction of the feature amount is performed based on the correlation obtained in advance between the predetermined feature amount regarding the driving signal and the index value Df. With this, the ink discharge operation and the ink droplet amount can be adjusted suitably with a simple process.

The feature amount is the voltage amplitude of the driving signal. With this, the ink discharge operation and the ink droplet amount can be adjusted with a simple process of changing the voltage amplitude.

The head unit group HU discharges the ink droplet which cures by the ultraviolet ray from the nozzle 53, and in the fixing step, the ultraviolet ray is irradiated by the fixer 24 to the ink discharged from the nozzle 53 to land on the recording medium M. Then, the curing of the ink and the fixing onto the recording medium M starts. With this, based on the measured result of the optical measurement by the spectral colorimeter 3 performed while the curing reaction is in progress in the ultraviolet curing ink, the ink droplet amount can be adjusted in a short amount of time more accurately.

The inkjet recording device 1 according to the present embodiment includes a head unit group HU which discharges the ink droplet from the nozzle 53, a fixer 24 which cures the ink on the recording medium M and fixes the ink on the recording medium M, and a controller 40. The controller 40 uses the head unit group HU to discharge the ink droplet from the nozzle 53 onto the recording medium M and records the halftone region H in which the ink is discharged in a predetermined halftone pattern and the solid region S in which the ink completely covers the surface of the recording medium M (recording controller). The controller 40 controls the fixer 24 to start the curing of the ink which is discharged from the nozzle 53 and which is landed on the recording medium M and to fix the ink onto the recording medium M (fixing controller). The controller 40 obtains the measured result by the spectral colorimeter 3 measuring the non-recording region W in which the image is not recorded on the recording medium M (first reading result obtainer). The controller 40 obtains the measured result for the halftone region H and the solid region S so that between the halftone region H and the solid region S, the difference of the elapsed time from the start of curing by the fixer 24 to the optical measurement by the spectral colorimeter is within a predetermined reference difference (second reading result obtainer). The controller 40 obtains the index value Df regarding the ink coverage rate in the halftone region H based on the measured result measured by the spectral colorimeter 3 for the non-recording region W, halftone region H, and the solid region S (coverage information obtainer). The controller 40 performs the setting regarding the adjustment according to the predetermined halftone of the ink droplet amount discharged from the nozzle 53 based on the index value Df (setting unit).

According to the above configuration, the droplet amount of ink discharged from the nozzle 53 can be accurately adjusted in a short amount of time.

The present invention is not limited to the above-described embodiment and modification, and various changes are possible.

For example, the pattern region 72 in the test chart 7 can be recorded to be arranged in a direction intersecting with the conveying direction and inclining in the width direction (intersecting direction). Even with a pattern region 72 recorded as described above, by performing the optical measurement by the spectral colorimeter 3 along the arrangement direction, the optical measurement on the measured point mp in each region can be easily performed in a short amount of time.

If optical measurement of the same type of recording medium M is performed with the same measurement condition by the same spectral colorimeter 3, the medium surface reflection rate RM of the non-recording region W becomes the same value if there are no other error factors. Therefore, the optical measurement on the non-recording region W does not always have to be performed with the optical measurement on the halftone region H and the solid region S. For example, the value of the medium surface reflection rate RM obtained by measuring the non-recording region W with the same measurement condition as the halftone region H and the solid region S can be stored in the storage 44 and referred when the index value Df is calculated.

The halftone region H and the solid region S may be recorded on the separate recording medium M and measured at a different timing to obtain the index value Df based on the above measured result. In this case, the halftone region H and the solid region S are recorded on the same type of recording medium M and the measurement condition by the spectral colorimeter 3 is set to be the same. Moreover, the optical measurement is performed at a timing so that the difference of the elapsed time from the ultraviolet ray irradiation to the start of measurement between the halftone region H and the solid region S is within a predetermined reference difference. The halftone reflection rate RH and the ink surface reflection rate RS obtained as described above are the same when the halftone region H and the solid region S are recorded on the same recording medium M if there are no other error factors. Therefore, even if the halftone region H and the solid region S are recorded on separate recording mediums M, the index value Df can be suitably obtained.

Based on the measured result (spectral reflection rate characteristic) by the spectral colorimeter 3, the tristimulus value of the CIE-XYZ color system in the external apparatus 2 and the LMS characteristic value in the modification can be calculated, and the calculated result can be input in the controller 40 of the inkjet recording device 1 through the external apparatus interface 64. The calculation of the index value Df and the calculation of the adjustment value of the driving voltage (head voltage coefficient HVC) can be performed in the external apparatus 2 and the result can be input in the controller of the inkjet recording device 1.

The spectral colorimeter 3 is provided inside the inkjet recording device 1. The spectral colorimeter in this case is positioned in the position facing the outer circumference surface of the belt 263 of the delivering unit 26, and the surface of the recording medium M conveyed by the belt 263 is measured. The optical measurement of the surface of the recording medium M by the spectral colorimeter can be performed by pausing the conveying by the belt 263 or by continuing the conveying. The spectral colorimeter may be positioned in a position in which the recording medium M on the outer circumference surface of the conveying drum 21 can be measured.

According to the above-described embodiment and the modification, the halftone reflection rate RH, the medium surface reflection rate RM, and the ink surface reflection rate RS used for the calculation of the index value Df are obtained based on the spectral reflection rate characteristics but the present invention is not limited to the above. The halftone reflection rate RH, the medium surface reflection rate RM, and the ink surface reflection rate RS are to be characteristic values regarding the reflection rate (values which change according to the reflection rate). For example, the value may be a value based on a detection signal detected by a light receiving element detecting the strength of the reflected light on the recording medium M. Therefore, instead of the spectral colorimeter 3, the light receiving element may read the test chart 7 using the arranged line sensor 25.

A halftone image in which the dots are not separated can be used as the halftone region H (halftone image).

Instead of the ultraviolet curing ink, ink which cures by other types of energy can be used, the energy including, visible light, infrared light, or heat. Even with such ink, the absorption amount of the wavelength band of the visible light changes even after the applying of the energy ends and the reflection rate changes. Therefore, by using the adjustment method according to the present invention, the droplet amount of ink discharged from the nozzle can be accurately adjusted in a short amount of time.

The recording medium M is not limited to sheets of paper and can be a recording medium with a long length such as a rolled sheet or a continuous sheet folded like a fan.

According to the above-described embodiment and modification, the driving voltages Von, Voff in the driving signal are adjusted to adjust the droplet amount of the discharged ink, but the present invention is not limited to the above, and other feature amounts in the driving signal such as applying time of voltage can be adjusted.

According to the above-described embodiment and modification, the recording medium M is conveyed by the conveying drum 21, but the present invention is not limited to the above. For example, the present invention can be applied to the inkjet recording device which conveys the recording medium M with the conveying belt which moves in response to the rotation of the roller supported by two rollers.

According to the above-described embodiment and modification, the inkjet recording device 1 in a single pass format is described, but the present invention can be applied to the inkjet recording device which records the image while scanning with a recording head.

According to the above-described embodiment and modification, a piezo type inkjet recording device 1 using the piezoelectric element 55 is used, but the present invention is not limited to the above, and various types of inkjet recording devices can be employed in the present invention such as a thermal type which heats ink to generate bubbles and which discharges ink.

Although various embodiments of the present invention are described, the scope of the present invention is not limited to the embodiments described above, and the scope of the invention is limited by the attached claims and its equivalents.

Industrial Applicability

The present invention can be used in the ink discharge operation adjustment method and the inkjet recording device.

Reference Signs List

1 inkjet recording device
2 external apparatus
3 spectral colorimeter
7 test chart
70 test pattern
71 dot pattern region
72 pattern region
10 sheet feeder
20 image recorder
21 conveying drum
24 fixer
25 line sensor
30 sheet ejector
40 controller
41 CPU
42 RAM
43 ROM
44 storage
50, 50Y, 50M, 50C, 50K head unit
51, 51Y, 51M, 51C, 51K head module
51M, 51C, 51K head module
52 inkjet head
53 nozzle
61 inkjet head controlling circuit
62 line sensor controlling circuit
63 conveying drum motor controlling circuit
64 external apparatus interface
65 spectral colorimeter interface
Df index value
H halftone region
HU head unit group
HVC head voltage coefficient
M recording medium
mp measured point
RH halftone reflection rate

RM medium surface reflection rate
RS ink surface reflection rate
S solid region
W non-recording region

**Claims**

1. An ink discharge operation adjustment method which performs an adjustment regarding an ink discharge operation by an ink discharger which discharges a droplet of ink from a nozzle, the method comprising:

   recording performed by the ink discharger discharging the droplet of the ink from the nozzle on a recording medium to record a halftone image in which the ink is discharged to form a predetermined halftone pattern and a solid image in which the ink completely covers a surface of the recording medium;
   fixing performed by a fixer to start curing of the ink which is discharged from the nozzle and which landed on the recording medium and to start fixing of the ink onto the recording medium;
   first reading result obtaining in which a reading result is obtained by a reader reading a non-recording region in which an image is not recorded on a recording medium;
   second reading result obtaining in which a reading result of the halftone image and the solid image is obtained so that a difference of an elapsed time from a start of the curing by the fixer to the reading by the reader is within a predetermined reference difference between the halftone image and the solid image;
   coverage rate information obtaining in which coverage rate information regarding a coverage rate of the ink in the halftone image is obtained based on the reading result by the reader reading the non-recording region, the halftone image, and the solid image; and
   setting which performs setting regarding adjustment of a droplet amount of the ink discharged from the nozzle based on the coverage rate information.

2. The ink discharge operation adjustment method according to claim 1, wherein, in the recording, the halftone image and the solid image are recorded on one recording medium.

3. The ink discharge operation adjustment method according to claim 2, wherein, in the second reading result obtaining, the reading result is obtained so that at least a portion of the halftone image on the one recording medium and at least a portion of the solid image on the one recording medium are read by the reader within a predetermined reference time difference.

4. The ink discharge operation adjustment method according to claim 3, wherein,
in the recording, the ink discharger discharges the droplet of the ink from the nozzle onto a recording medium conveyed by a conveyor;
the conveyor conveys the recording medium on a path which passes a landing range in which the ink is discharged from the nozzle of the ink discharger and a fixing range in which the ink is fixed by the fixer;
the ink discharger includes a plurality of nozzles provided throughout a recording width of the image in a width direction orthogonal to a conveying direction of the recording medium conveyed by the conveyor; and
in the recording, at least the portion of the halftone image and at least the portion of the solid image are recorded on the one recording medium conveyed by the conveyor arranged in an intersecting direction intersecting with the conveying direction.

5. The ink discharge operation adjustment method according to any one of claims 2 to 4, wherein in the first reading result obtaining and the second reading result obtaining, the reading result is obtained so that at least a portion of each of the non-recording region, the halftone image, and the solid image on the one recording medium are read by the reader within a predetermined reference time difference.

6. The ink discharge operation adjustment method according to claim 4, wherein,
in the recording, the halftone image and the solid image are recorded so that at least a portion of each of the non-recording region, the halftone image and the solid image are arranged in the intersecting direction; and
in the first reading result obtaining and the second reading result obtaining, the reading result is obtained so that at least a portion of each of the non-recording region, the halftone image and the solid image on the one recording medium are read by the reader within a predetermined reference time difference.

7. The ink discharge operation adjustment method according to any one of claims 1 to 6, wherein the predetermined halftone pattern is determined so that dots formed on the recording medium by ink discharge from the nozzle are separated from each other.

8. The ink discharge operation adjustment method according to claim 7, wherein,
in the recording, the ink discharger discharges the droplet of the ink from the nozzle onto a recording medium conveyed by the conveyor;
the conveyor conveys the recording medium on a path which passes a landing range in which the ink is discharged from the nozzle of the ink discharger and a fixing range in which the ink is fixed by the fixer;
the ink discharger includes a plurality of nozzles provided throughout a recording width of the image in a width direction orthogonal to a conveying direction of the recording medium conveyed by the conveyor; and
the predetermined halftone pattern is determined so that a diameter of the dot formed on the recording medium by the droplet of the ink discharged from the nozzle is three times or more with relation to arrangement intervals of the plurality of nozzles in the width direction.

9. The ink discharge operation adjustment method according to any one of claims 1 to 8, wherein in the coverage rate information obtaining, a characteristic value is obtained regarding a reflection rate of light in each of the non-recording region, a recording region of the halftone image and a recording region of the solid image from the reading result of the first reading result obtaining and the second reading result obtaining, and obtains the coverage rate information based on the characteristic value.

10. The ink discharge operation adjustment method according to claim 9, wherein,
the reader is able to obtain a spectral reflection characteristic for the surface of the recording medium, and
in the coverage rate information obtaining, the characteristic value is obtained based on the spectral reflection rate characteristic obtained by the reader for each of the non-recording region, the halftone image, and the solid image.

11. The ink discharge operation adjustment method according to claim 9 or 10, wherein in the coverage rate information obtaining, at least one of tristimulus values in a CIE-XYZ color system is obtained as the characteristic value.

12. The ink discharge operation adjustment method according to claim 11, wherein,
the ink discharger includes a yellow ink discharge head which discharges from the nozzle yellow ink, a magenta ink discharge head which discharges from the nozzle magenta ink, a cyan ink discharge head which discharges from the nozzle cyan ink, and a black ink discharge head which discharges from the nozzle black ink,
in the coverage rate information obtaining, if the coverage rate information regarding the halftone image recorded by the yellow ink discharge head is obtained, the coverage rate information is obtained based on a stimulus value Z obtained by the reader reading the non-recording region, and the halftone image and the solid image recorded with the yellow ink discharge head, and

in the coverage rate information obtaining, if the coverage rate information regarding the halftone image recorded by any one ink discharge head among the magenta ink discharge head, the cyan ink discharge head, and the black ink discharge head is obtained, the coverage rate information is obtained based on a stimulus value Y obtained by the reader reading the non-recording region, and the halftone image and the solid image recorded with the any one ink discharge head.

13. The ink discharge operation adjustment method according to claim 10, wherein in the coverage rate information obtaining, the coverage rate information is obtained based on a representative value of the reflection rate in a portion of a wavelength band including a wavelength in which a maximum value can be obtained in a difference between a reflection rate in the spectral reflection rate characteristic in the non-recording region and the reflection rate in the spectral reflection rate characteristic in the solid image in a wavelength band of visible light.

14. The ink discharge operation adjustment method according to claim 13, wherein,
the ink discharger includes a yellow ink discharge head which discharges from the nozzle yellow ink, a magenta ink discharge head which discharges from the nozzle magenta ink, a cyan ink discharge head which discharges from the nozzle cyan ink, and a black ink discharge head which discharges from the nozzle black ink,
in the coverage rate information obtaining, if the coverage rate information regarding the halftone image recorded by the yellow ink discharge head is obtained, the coverage rate information is obtained based on a representative value of the spectral reflection rate in a wavelength band including at least a portion of a wavelength band with 430 nm or more and 470 nm or less,
in the coverage rate information obtaining, if the coverage rate information regarding the halftone image recorded by the magenta ink discharge head is obtained, the coverage rate information is obtained based on a representative value of the spectral reflection rate in a wavelength band including at least a portion of a wavelength band with 520 nm or more and 560 nm or less,
in the coverage rate information obtaining, if the coverage rate information regarding the halftone image recorded by the cyan ink discharge head is obtained, the coverage rate information is obtained based on a representative value of the spectral reflection rate in a wavelength band including at least a portion of a wavelength band with 600 nm or more and 640 nm or less, and
in the coverage rate information obtaining, if the coverage rate information regarding the halftone image recorded by the black ink discharge head is obtained, the coverage rate information is obtained based on a representative value of the spectral reflection rate in a wavelength band including at least a portion of a wavelength band with 520 nm or more and 560 nm or less.

15. The ink discharge operation adjustment method according to any one of claims 9 to 14, wherein,
in the coverage rate information obtaining, the characteristic values in a plurality of difference positions are obtained for each of the non-recording region, the halftone image, and the solid image, and the representative value of the characteristic value which satisfies a reliability condition regarding reliability of the characteristic value is determined from among the characteristic values in the plurality of positions, and
in the coverage rate information obtaining, the coverage rate information is obtained based on the representative value of each of the non-recording region, the halftone image, and the solid image.

16. The ink discharge operation adjustment method according to claim 15, wherein,
in the coverage rate information obtaining, a representative value of a characteristic value within a predetermined first reference range is determined from a minimum value of the characteristic value in the plurality of positions for each of the halftone image and the solid image, and
in the coverage rate information obtaining, a representative value of a characteristic value within a predetermined second reference range is determined from a maximum value of the characteristic value in the plurality of positions for the non-recording region.

17. The ink discharge operation adjustment method according to any one of claims 9 to 16, wherein,
in the coverage rate information obtaining, from the reading result, a characteristic value RM regarding the reflection rate of light in the non-recording region, a characteristic value RH regarding the reflection rate of light in the recording region of the halftone image, and a characteristic value RS regarding the reflection rate of light in the recording region of the solid image are obtained, and the coverage rate information Df is obtained by a formula

$$Df = (RM-RH)/(RM-RS).$$

18. The ink discharge operation adjustment method according to any one of claims 1 to 17, wherein,
the ink discharger discharges the droplet of the ink from the nozzle according to a predetermined driving signal, and
in the setting, setting regarding correction of a feature amount is performed based on a correlation obtained in advance between a predetermined feature amount regarding the driving signal and the coverage rate information.

19. The ink discharge operation adjustment method according to claim 18, wherein the feature amount is a voltage amplitude of the driving signal.

20. The ink discharge operation adjustment method according to any one of claims 1 to 19, wherein,
the ink discharger discharges from the nozzle the droplet of the ink which cures by light in a predetermined wavelength band, and
in the fixing, the fixer irradiates the light on the ink discharged from the nozzle and landed on the recording medium to start the curing of the ink and the fixing of the ink to the recording medium.

21. An inkjet recording device comprising:

an ink discharger which discharges a droplet of ink from a nozzle;
a recording controller which controls recording performed by the ink discharger discharging the droplet of the ink from the nozzle on a recording medium to record a halftone image in which the ink is discharged to form a predetermined halftone pattern and a solid image in which the ink completely covers a surface of the recording medium;
a fixer which cures the ink on the recording medium and which fixes the ink onto the recording medium;
a fixing controller which controls the fixer to start curing of the ink which is discharged from the nozzle and which landed on the recording medium and to start fixing of the ink onto the recording medium;
a first reading result obtainer in which a reading result is obtained by a reader reading a non-recording region in which an image is not recorded on a recording medium;
a second reading result obtainer in which a reading result of the halftone image and the solid image is obtained so that a difference of an elapsed time from a start of the curing by the fixer to the reading by the reader is within a predetermined reference difference between the halftone image and the solid image;
a coverage rate information obtainer in which coverage rate information regarding a coverage rate of the ink in the halftone image is obtained based on the reading result by the reader reading the non-recording region, the halftone image, and the solid image; and
a setter which performs setting regarding adjustment of a droplet amount of the ink discharged from the nozzle based on the coverage rate information.

# FIG.1

WIDTH DIRECTION ⊙

# FIG.2

CONVEYING DIRECTION

WIDTH DIRECTION

## FIG.3

51

53

52a
52b
52c
52d

d d  d d

CONVEYING
DIRECTION

WIDTH
DIRECTION

## FIG.4A

54  55

## FIG.4B

0V    Von    0V

## FIG.4C

54  55

0V    Voff    0V

## FIG.5

## FIG.6

*FIG.7A*

*FIG.7B*

*FIG.8*

*FIG.9*

*FIG.10A*

*FIG.10B*

*FIG.11A*

*FIG.11B*

## FIG.12

70Y

70M

70C

70K

7

CONVEYING
DIRECTION

WIDTH
DIRECTION

## FIG.13

51a   51c   50

51b   51d

70   71a   71b   71c   71d

72a

72b

72c

72d

mp   H   S   W   Ha   Hb   Hc   Hd

CONVEYING
DIRECTION

WIDTH
DIRECTION

*FIG.14A*

Ha

CONVEYING
DIRECTION

WIDTH
DIRECTION

*FIG.14B*

Hb

CONVEYING
DIRECTION

WIDTH
DIRECTION

**FIG.14C**

Hc

CONVEYING
DIRECTION

WIDTH
DIRECTION

**FIG.14D**

Hd

CONVEYING
DIRECTION

WIDTH
DIRECTION

# FIG.15

CONVEYING
DIRECTION

WIDTH
DIRECTION

# FIG.16A

91

CONVEYING
DIRECTION

WIDTH
DIRECTION

# FIG.16B

CONVEYING
DIRECTION

WIDTH
DIRECTION

FIG.17

# *FIG.18*

DRIVING VOLTAGE
ADJUSTMENT PROCESS

FOR ALL INKJET HEADS,
SET HEAD VOLTAGE COEFFICIENT TO
INITIAL VALUE, TURN OFF ADJUSTMENT
COMPLETE FLAG — *S101*

RECORD TEST CHART,
IRRADIATE ULTRAVIOLET RAYS — *S102*

OBTAIN MEASURED RESULT OF TEST CHART — *S103*

OBTAIN STIMULUS VALUE XYZ FROM
SPECTRAL REFLECTION RATE CHARACTERISTIC — *S104*

SELECT INKJET HEAD OF ADJUSTMENT TARGET — *S105*

IS
ADJUSTMENT COMPLETE FLAG
ON? — *S106*

YES

NO

PERFORM INDEX VALUE
CALCULATING PROCESS — *S107*

IS
OBTAINED INDEX VALUE WITHIN
ALLOWABLE RANGE? — *S108*

NO

YES — *S109*

TURN ON ADJUSTMENT
COMPLETE FLAG

*S110*

PERFORM HEAD VOLTAGE
COEFFICIENT ADJUSTMENT

IS
THERE INKJET HEAD
WHICH IS NOT DETERMINED
YET? — *S111*

NO

YES

IS
ADJUSTMENT COMPLETE
FLAG ON FOR ALL INKJET
HEADS? — *S112*

NO

YES

END

**FIG.19**

INDEX VALUE
CALCULATING PROCESS

DETERMINE REFERENCE
MEASURED POINT — S201

OBTAIN REFERENCE
CHARACTERISTIC VALUE — S202

CALCULATE
REPRESENTATIVE VALUE OF
CHARACTERISTIC VALUE — S203

CALCULATE INDEX VALUE — S204

RETURN

**FIG.20**

# FIG.21

```
        ┌─────────────────────────┐
        │   DRIVING VOLTAGE       │
        │   ADJUSTMENT PROCESS    │
        └─────────────────────────┘
                    │
                    ▼
    ┌──────────────────────────────────────┐
    │   FOR ALL INKJET HEADS,              │ ─── S101
    │   SET HEAD VOLTAGE COEFFICIENT TO    │
    │   INITIAL VALUE,                     │
    │   TURN OFF ADJUSTMENT COMPLETE FLAG  │
    └──────────────────────────────────────┘
                    │
                    ▼
    ┌──────────────────────────────────────┐
    │   RECORD TEST CHART,                 │ ─── S102
    │   IRRADIATE ULTRAVIOLET RAYS         │
    └──────────────────────────────────────┘
                    │
                    ▼
    ┌──────────────────────────────────────┐
    │   OBTAIN MEASURED                    │ ─── S103
    │   RESULT OF TEST CHART               │
    └──────────────────────────────────────┘
                    │
                    ▼
    ┌──────────────────────────────────────┐
    │   OBTAIN LMS CHARACTERISTIC          │ ─── S104a
    │   VALUE FROM SPECTRAL REFLECTION RATE │
    │   CHARACTERISTIC                     │
    └──────────────────────────────────────┘
                    │
                    ▼
    ┌──────────────────────────────────────┐
    │   SELECT INKJET HEAD OF ADJUSTMENT   │ ─── S105
    │   TARGET                             │
    └──────────────────────────────────────┘
                    │
                    ▼
         ◇ IS ADJUSTMENT COMPLETE FLAG ON? ◇ ─── S106
              │ YES              │ NO
              │                  ▼
              │      ┌──────────────────────────┐
              │      │ PERFORM INDEX VALUE      │ ─── S107
              │      │ CALCULATING PROCESS      │
              │      └──────────────────────────┘
              │                  │
              │                  ▼
              │    ◇ IS OBTAINED INDEX VALUE WITHIN ◇ ─── S108
              │    ◇ ALLOWABLE RANGE?              ◇
              │         │ YES          │ NO
              │         ▼              ▼
              │  ┌──────────────┐  ┌──────────────────┐
              │  │ TURN ON      │  │ PERFORM HEAD     │ ─── S110
              │  │ ADJUSTMENT   │  │ VOLTAGE          │
              │  │ COMPLETE FLAG│  │ COEFFICIENT      │
              │  │         S109 │  │ ADJUSTMENT       │
              │  └──────────────┘  └──────────────────┘
              │         │              │
              │         ▼              ▼
              │    ◇ IS THERE INKJET HEAD ◇ ─── S111
              │    ◇ WHICH IS NOT DETERMINED ◇
              │    ◇ YET?                  ◇
              │         │ YES        │ NO
              │         └────────────┤
              │                      ▼
              │    ◇ IS ADJUSTMENT COMPLETE FLAG ON FOR ◇ ─── S112
              │    ◇ ALL INKJET HEADS?                  ◇
              └─── NO                 │ YES
                                      ▼
                              ┌──────────────┐
                              │     END      │
                              └──────────────┘
```

## INTERNATIONAL SEARCH REPORT

| International application No. |
| --- |
| PCT/JP2017/023994 |

| | |
| --- | --- |
| A. CLASSIFICATION OF SUBJECT MATTER | |
| *B41J2/205*(2006.01)i, *B41J2/01*(2006.01)i | |

According to International Patent Classification (IPC) or to both national classification and IPC

| B. FIELDS SEARCHED |
| --- |

Minimum documentation searched (classification system followed by classification symbols)
B41J2/205, B41J2/01

Documentation searched other than minimum documentation to the extent that such documents are included in the fields searched
Jitsuyo Shinan Koho        1922–1996   Jitsuyo Shinan Toroku Koho    1996–2017
Kokai Jitsuyo Shinan Koho  1971–2017   Toroku Jitsuyo Shinan Koho    1994–2017

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | WO 2017/047448 A1 (Konica Minolta, Inc.), 23 March 2017 (23.03.2017), paragraphs [0021] to [0087]; fig. 1 to 7 (Family: none) | 1-7,9-14, 17-21 |
| Y | JP 2007-15336 A (Seiko Epson Corp.), 25 January 2007 (25.01.2007), paragraphs [0002], [0013] to [0065]; fig. 7 to 14 (Family: none) | 1-7,9-14, 17-21 |
| Y | JP 2013-94977 A (Seiko Epson Corp.), 20 May 2013 (20.05.2013), paragraphs [0020] to [0058]; fig. 3 to 11 & US 2013/0106935 A1 paragraphs [0032] to [0063]; fig. 3 to 11 | 1-7,9-14, 17-21 |

| ☒ Further documents are listed in the continuation of Box C. | ☐ See patent family annex. |
| --- | --- |

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered    to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 28 July 2017 (28.07.17) | 08 August 2017 (08.08.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2017/023994

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2014-80007 A  (Fujifilm Corp.),<br>08 May 2014 (08.05.2014),<br>paragraphs [0041] to [0060]; fig. 5 to 6<br>(Family: none) | 10-14,17-20 |
| A | JP 2013-141799 A  (Seiko Epson Corp.),<br>22 July 2013 (22.07.2013),<br>entire text; all drawings<br>(Family: none) | 1-21 |
| A | US 2015/0138288 A1  (CHEN, Samuel),<br>21 May 2015 (21.05.2015),<br>entire text; all drawings<br>(Family: none) | 1-21 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005246655 A

- JP 2016163940 A